# EUROPEAN PATENT APPLICATION

(11) **EP 2 804 434 A1**
(43) Date of publication of application: **19.11.2014**
(21) Application number: 13736108.5
(22) Date of filing: 09.01.2013
(51) Int. Cl.: H04W 72/06, H04J 13/16, H04W 24/10, H04W 72/04

(54) **WIRELESS RESOURCE ADMINISTRATION UNIT**

(30) Priority: 10.01.2012 JP 2012001874
(71) Applicant: NTT DOCOMO, INC., Chiyoda-ku Tokyo 100-6150 (JP)
(72) Inventor: SHIMIZU, Ryouichi, Tokyo 100-6150 (JP); OBATA, Kazunori, Tokyo 100-6150 (JP); HARANO, Seigo, Tokyo 100-6150 (JP); YABUKI, Shogo, Tokyo 100-6150 (JP)
(74) Representative: Hoffmann Eitle
(86) International application number: PCT/JP2013/050204
(87) International publication number: WO 2013/105576

(57) **Abstract**

In a method for managing cyclic shift codes used for reporting the CQI, when a new communication occurs between a base station and a mobile station, a cyclic shift code is allocated to the CQI report from the mobile station in accordance with a predetermined order of precedence. When the communication has ended or been disconnected, the cyclic shift code is released. In the allocating step, a cyclic shift code is allocated to the CQI report from the mobile station for the newly occurring communication, the allocated cyclic shift code having a precedence ranking that is lower than a precedence ranking of the allocated cyclic shift code allocated latest for the CQI report from another mobile station, being not used for CQI reports from other mobile stations, and having a highest precedence ranking in the predetermined order of precedence.

## Description

### FIELD OF THE INVENTION

The present invention relates to a management apparatus for radio resources that are used by mobile stations for reporting channel quality indicators to a base station corresponding to reception qualities at mobile stations.

### BACKGROUND ART

In UMTS LTE (Universal Mobile Telecommunications System Long Term Evolution), OFDMA (Orthogonal Frequency Division Multiple Access) is used for downlink modulation, whereas SC-FDMA (Single-Carrier Frequency-Division Multiple Access) is used for uplink modulation. In LTE, high-speed packet communication is accomplished by dynamic scheduling in which radio resources in the time direction and in the frequency direction are dynamically allocated on the basis of instant reception quality of each subframe (for example, Patent Document 1, Patent Document 2, and Non-patent Document 1).

However, in dynamic scheduling, it is necessary to transmit control information for feeding back of reception quality, notification of allocated radio resources, etc. whenever data is transmitted. If dynamic scheduling is used for packet communication in which packet data of which the payload size is small occurs periodically, such as VoIP (Voice over IP), control overhead is relatively high, reducing transmission efficiency. Accordingly, semi-persistent scheduling has been proposed in which the same radio resources are fixedly allocated without providing control information (for example, Patent Document 1, Patent Document 2, and Non-patent Document 2).

For both types of scheduling, each mobile station reports a channel quality indicator (CQI) to the base station, in which the CQI corresponds to the reception quality of reference signals at the mobile station, and the base station allocates radio resources to each mobile station on the basis of the CQI.

### PRIOR ART DOCUMENTS

### Patent Documents

Patent Document 1: JP-A-2011-124656
Patent Document 2: JP-A-2010-522467

### Non-patent Documents

Non-patent Document 1: 3GPP TS 36.213 V8.8.0 (2009-09), 3rd Generation Partnership Project; Technical Specification Group Radio Access Network; Evolved Universal Terrestrial Radio Access (E-UTRA); "Physical layer procedures", September 2009
Non-patent Document 2: 3GPP TS 36.321 V8.10.0 (2011-09), 3rd Generation Partnership Project; Technical Specification Group Radio Access Network; Evolved Universal Terrestrial Radio Access (E-UTRA); "Medium Access Control (MAC) protocol specification", September 2011

### SUMMARY OF THE INVENTION

The report of the channel quality indicator is transmitted from each mobile station to the base station through, for example, a PUCCH (Physical Uplink Control Channel). The base station allocates resource unit groups (each of which has periodicity) that are used by mobile stations for reporting the channel quality indicator to multiple mobile stations, in such a manner that redundant allocation of the same resource units (specified by the frequency and the time) to multiple mobile stations is minimized for the reports of the channel quality indicator from the multiple mobile stations. The base station imparts the allocated resource group to each mobile station. However, when the base station communicates with many mobile stations, the base station cannot avoid allocating a resource unit group to multiple mobile stations. In this case, the multiple mobile stations modulate reports of the channel quality indicator by different cyclic shift codes and transmit the modulated reports of the channel quality indicator to the base station, so that the single resource unit group is shared by multiple mobile stations. The base station can identify the transmission source of the received report of the channel quality indicator by the code used for the modulation.

Such a technique in which multiple mobile stations share a resource unit group for reporting the channel quality indicator has problems described below.

When communication between the base station and a mobile station has been disconnected, radio resources (including the cyclic shift code) used by the mobile station for reporting the channel quality indicator for the communication are released. For example, during communication, the base station transmits a TA Command (timing adjustment command) to the mobile station periodically (for example, at regular intervals of 20 msec) in order to adjust uplink transmission timing of the mobile station, and upon receiving the TA Command, the mobile station returns a TA Command Ack (timing adjustment command acknowledgment) to the base station. When the base station has not newly received a TA Command Ack within a certain period (for example, 750 msec) after the last reception of a TA Command Ack, the base station releases the cyclic shift code allocated for reporting the channel quality indicator from the mobile station. The released cyclic shift code may be allocated to another mobile station that is to use the resource unit group for sending the report of the channel quality indicator. On the other hand, when the mobile station has not newly received a TA Command within a certain period (for example, 750 msec) after the last reception of a TA Command, the mobile station releases the radio resources (including the cyclic shift code) allocated for reporting the channel quality indicator from the mobile station.

However, depending on the radiowave environment, it is likely that, whereas the mobile station can receive the downlink TA Command, the base station cannot receive the uplink TA Command Ack. In this case, the base station releases the cyclic shift code significantly in advance of the release of it by the mobile station. Then, although the mobile station has not yet released the cyclic shift code, the base station may allocate the cyclic shift code to another mobile station that is to newly communicate with the base station and that is to use the same resource unit group for sending the report of the channel quality indicator. If this happens, multiple mobile stations will send reports of the channel quality indicator using the same resource unit group and the same cyclic shift code, and thus the base station cannot properly analyze the reports of the channel quality indicator.

Accordingly, the present invention provides a radio resource management apparatus for reducing the likelihood that a radio resource for reporting the channel quality indicator that has been newly released by a base station will be allocated to a mobile station that is to newly communicate with the base station.

According to the present invention, a radio resource management apparatus is used in a system in which a base station communicates with multiple mobile stations in accordance with orthogonal frequency division multiple access, multiple mobile stations modulate channel-quality-indicator reports by different cyclic shift codes for reporting channel quality indicators corresponding to reception qualities at the mobile base stations to the base station, respectively, and uplink the modulated channel-quality-indicator reports by using resource units specified by frequency and time. The radio resource management apparatus manages radio resources used for the channel-quality-indicator reports. The radio resource management apparatus includes: a resource unit group designator adapted for newly designating, when a communication newly occurs between the base station and a mobile station, an uplink resource unit group in a frequency band having periodicity, so that the mobile station uses the uplink resource unit group for sending a channel-quality-indicator report periodically; a cyclic-shift-code allocator adapted for newly allocating a cyclic shift code to the channel-quality-indicator report from the mobile station to the base station with respect to the designated resource unit group, in accordance with a predetermined order of precedence, multiple cyclic shift codes being arranged in the predetermined order of precedence that is different from a cyclic generation order of the cyclic shift codes and that is different from a reverse order of the cyclic generation order; a cyclic-shift-code releaser adapted for releasing the cyclic shift code allocated to the channel-quality-indicator report from the mobile station to the base station when the communication between the base station and the mobile station has ended or been disconnected; a used cyclic-shift-code storage unit for storing multiple used cyclic shift codes allocated by the cyclic-shift-code allocator with respect to the designated resource unit group in such a manner that the used cyclic shift codes are associated with mobile stations to which the used cyclic shift codes are allocated; and a latest-allocated cyclic-shift-code storage unit for storing a latest allocated cyclic shift code allocated latest by the cyclic-shift-code allocator. The cyclic-shift-code allocator is adapted for newly allocating a new cyclic shift code to a channel-quality-indicator report from a mobile station to the base station for a communication that newly occurs between the base station and the mobile station, the new cyclic shift code having a precedence ranking that is lower than a precedence ranking of the latest allocated cyclic shift code allocated latest by the cyclic-shift-code allocator for a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence.

This radio resource management apparatus allocates a cyclic shift code that is not used for channel-quality-indicator reports from other mobile stations among cyclic shift codes for the designated resource unit group to a channel-quality-indicator report from a mobile station to the base station for a communication that newly occurs between the base station and the mobile station. Therefore, it is possible to prevent a cyclic shift code currently used for a channel-quality-indicator report from another mobile station from being allocated to a new communication. In addition, the cyclic-shift-code allocator allocates a new cyclic shift code to a channel-quality-indicator report from a mobile station to the base station for a communication that newly occurs between the base station and the mobile station, the new cyclic shift code having a precedence ranking that is lower than a precedence ranking of the latest allocated cyclic shift code allocated latest for a channel-quality-indicator report from another mobile station, the new cyclic shift code not being used for channel-quality-indicator reports from other mobile stations among cyclic shift codes for the designated resource unit group, and the new cyclic shift code having a highest precedence ranking in the predetermined order of precedence. Since this allocation is conducted whenever a new cyclic shift code is allocated to a mobile station, a cyclic shift code released a long time ago for the resource unit group can be allocated to a newly occurring communication. For channel-quality-indicator reports, many resource unit groups are available, and multiple cyclic shift codes are available for each of resource unit groups. Accordingly, it is extremely unlikely that a cyclic shift code released a long time ago for a single resource unit group is coincident with a cyclic shift code for a channel-quality-indicator report that has been newly released by the base station. Therefore, there will be a low probability that a cyclic shift code for reporting the channel quality indicator that has been newly released by a base station will be allocated to a mobile station that is to newly communicate with the base station. Furthermore, since multiple cyclic shift codes to be allocated to mobile stations are arranged in the predetermined order of precedence that is different from the cyclic generation order of the cyclic shift codes and that is different from the reverse order of the cyclic generation order, cyclic shift codes having close sequence numbers in the cyclic generation order are less likely to be allocated to two mobile stations. Therefore, there will be a low probability that a delay wave of a channel-quality-indicator report from a mobile station modulated by a cyclic code will interfere with another channel-quality-indicator report from another mobile station modulated by another cyclic code.

The multiple mobile stations may include multiple first mobile stations that transmit the channel-quality-indicator reports to the base station at a first regular cycle and multiple second mobile stations that transmit the channel-quality-indicator reports to the base station at a second regular cycle. The radio resource management apparatus may further include a mobile station classifier adapted for classifying the multiple first mobile stations and the multiple second mobile stations into multiple mobile station groups in such a manner that multiple first mobile stations that use the same resource unit group for sending the channel-quality-indicator reports to the base station periodically and multiple second mobile stations that use a resource unit group that is at least partially the same as the resource unit group used by the first mobile stations for sending the channel-quality-indicator reports to the base station periodically belong to a mobile station group. The latest-allocated cyclic-shift-code storage unit may store the latest allocated cyclic shift code allocated latest by the cyclic-shift-code allocator, as a common latest allocated cyclic shift code that is common to the first mobile stations and the second mobile stations belonging to a mobile station group including a mobile station to which the latest allocated cyclic shift code is allocated latest by the cyclic-shift-code allocator. The cyclic-shift-code allocator may be adapted for newly allocating a new cyclic shift code to a channel-quality-indicator report from a first mobile station to the base station for a communication that newly occurs between the base station and the first mobile station, the new cyclic shift code having a precedence ranking that is lower than a precedence ranking of the latest allocated cyclic shift code that is common to the mobile station group to which the first mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence.

The term "use a resource unit group that is at least partially the same as the resource unit group" includes "use a resource unit group that is completely the same as the resource unit group" and "use a resource unit group that is partially the same as the resource unit group". The term "use a resource unit group that is completely the same as the resource unit group" means that the cycles of the channel-quality-indicator reports of the first mobile station and the second mobile station are the same, and that the first mobile station and the second mobile station transmit channel-quality-indicator reports at the same frequency and at the same time points. The term "use a resource unit group that is partially the same as the resource unit group" means that the cycle of the channel-quality-indicator report of the first mobile station is an integer multiple of or an integer part of the cycle of the channel-quality-indicator report of the second mobile station, and that the first mobile station and the second mobile station transmit channel-quality-indicator reports at the same frequency and partially the same time points. In the above-described embodiment, the latest-allocated cyclic-shift-code storage unit stores the latest allocated cyclic shift code that is common to a mobile station group constituted of multiple mobile stations that will share the same resource unit group periodically, and when a cyclic shift code is newly allocated to a first mobile station of which the transmission cycle of the channel-quality-indicator report is shorter, the cyclic-shift-code allocator allocates a new cyclic shift code to the first mobile station, the new cyclic shift code having a precedence ranking that is lower than a precedence ranking of the latest allocated cyclic shift code that is common to the mobile station group to which the first mobile station is to belong. Thus, by managing the latest allocated cyclic shift code that is common to a mobile station group constituted of multiple mobile stations that will share the same resource unit group periodically, it is possible that the same cyclic shift code is prevented from being allocated to multiple mobile stations belonging to each single mobile station group.

The cyclic-shift-code allocator may be adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest allocated cyclic shift code that is common to the mobile station group to which the second mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence. By managing the latest allocated cyclic shift code that is common to a mobile station group constituted of multiple mobile stations that will share the same resource unit group periodically, it is possible that the same cyclic shift code is prevented from being allocated to multiple mobile stations belonging to each single mobile station group.

When the first regular cycle at which multiple first mobile stations send the channel-quality-indicator reports to the base station is shorter than the second regular cycle at which multiple second mobile stations send the channel-quality-indicator reports to the base station, the resource unit group designator may be adapted for selecting, when a communication newly occurs between the base station and a second mobile station, an uplink resource unit group for which the number of used cyclic shift codes used for channel-quality-indicator reports from other mobile stations is minimum from among multiple uplink resource unit groups that can be allocated to the channel-quality-indicator report from the second mobile station. The cyclic-shift-code allocator may be adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest allocated cyclic shift code that is common to the mobile station group to which the second mobile station to which the new cyclic shift code is to be allocated is to belong, the new cyclic shift code being not used for channel-quality-indicator reports from other mobile stations among cyclic shift codes for the resource unit group selected by the resource unit group designator, and the new cyclic shift code having a highest precedence ranking in the predetermined order of precedence.

In this case, by selecting a resource unit group for which the number of used cyclic shift codes being used for channel-quality-indicator reports from other mobile stations is minimum, the resource unit group that is less likely to be interfered with channel-quality-indicator reports from other mobile stations can be designated to the second mobile station of which the transmission cycle of the channel-quality-indicator report is longer. The longer transmission cycle means that once the receiving side fails to receive, a long period is necessary before successful reception. By designating a resource unit group that is less likely to be interfered with channel-quality-indicator reports from other mobile stations to the second mobile station, it is possible to increase certainty of successful reception, at the base station, of the channel-quality-indicator report from the second mobile station of which the transmission cycle is longer. In addition, when a cyclic shift code is newly allocated to a second mobile station of which the transmission cycle of the channel-quality-indicator report is longer, the cyclic-shift-code allocator allocates a new cyclic shift code to the second mobile station, the new cyclic shift code having a precedence ranking that is lower than a precedence ranking of the latest allocated cyclic shift code that is common to the mobile station group to which the second mobile station is to belong. By managing the latest allocated cyclic shift code that is common to a mobile station group constituted of multiple mobile stations that will share the same resource unit group periodically, it is possible that the same cyclic shift code is prevented from being allocated to multiple mobile stations belonging to each single mobile station group.

According to the present invention, another radio resource management apparatus is used in a system in which a base station communicates with multiple mobile stations in accordance with orthogonal frequency division multiple access, multiple mobile stations modulate channel-quality-indicator reports by different cyclic shift codes for reporting channel quality indicators corresponding to reception qualities at the mobile base stations to the base station, respectively, and uplink the modulated channel-quality-indicator reports by using resource units specified by frequency and time. The radio resource management apparatus manages radio resources used for the channel-quality-indicator reports. The radio resource management apparatus includes: a resource unit group designator adapted for newly designating, when a communication newly occurs between the base station and a mobile station, an uplink resource unit group in a frequency band having periodicity, so that the mobile station uses the uplink resource unit group for sending a channel-quality-indicator report periodically; a cyclic-shift-code allocator adapted for newly allocating a cyclic shift code to the channel-quality-indicator report from the mobile station to the base station with respect to the designated resource unit group, in accordance with a predetermined order of precedence, multiple cyclic shift codes being arranged in the predetermined order of precedence that is different from a cyclic generation order of the cyclic shift codes and that is different from a reverse order of the cyclic generation order; a cyclic-shift-code releaser adapted for releasing the cyclic shift code allocated to the channel-quality-indicator report from the mobile station to the base station when the communication between the base station and the mobile station has ended or been disconnected; a used cyclic-shift-code storage unit for storing multiple used cyclic shift codes allocated by the cyclic-shift-code allocator with respect to the designated resource unit group in such a manner that the used cyclic shift codes are associated with mobile stations to which the used cyclic shift codes are allocated; and a latest-released cyclic-shift-code storage unit for storing a latest released cyclic shift code released latest by the cyclic-shift-code releaser. The cyclic-shift-code allocator is adapted for newly allocating a new cyclic shift code to a channel-quality-indicator report from a mobile station to the base station for a communication that newly occurs between the base station and the mobile station, the new cyclic shift code having a precedence ranking that is lower than a precedence ranking of the latest released cyclic shift code released latest by the cyclic-shift-code releaser for a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence.

This radio resource management apparatus allocates a cyclic shift code that is not used for channel-quality-indicator reports from other mobile stations among cyclic shift codes for the designated resource unit group to a channel-quality-indicator report from a mobile station to the base station for a communication that newly occurs between the base station and the mobile station. Therefore, it is possible to prevent a cyclic shift code currently used for a channel-quality-indicator report from another mobile station from being allocated to a new communication. In addition, the cyclic-shift-code allocator allocates a new cyclic shift code to a channel-quality-indicator report from a mobile station to the base station for a communication that newly occurs between the base station and the mobile station, the new cyclic shift code having a precedence ranking that is lower than a precedence ranking of the latest released cyclic shift code released latest from a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence. For this reason, a cyclic shift code released latest for the resource unit group can be prevented from being allocated to a newly occurring communication. Therefore, there will be no likelihood that a cyclic shift code for reporting the channel quality indicator that has been newly released by a base station will be allocated to a mobile station that is to newly communicate with the base station. Furthermore, since multiple cyclic shift codes to be allocated to mobile stations are arranged in the predetermined order of precedence that is different from the cyclic generation order of the cyclic shift codes and that is different from the reverse order of the cyclic generation order, cyclic shift codes having close sequence numbers in the cyclic generation order are less likely to be allocated to two mobile stations. Therefore, there will be a low probability that a delay wave of a channel-quality-indicator report from a mobile station modulated by a cyclic code will interfere with another channel-quality-indicator report from another mobile station modulated by another cyclic code.

The multiple mobile stations may include multiple first mobile stations that transmit the channel-quality-indicator reports to the base station at a first regular cycle and multiple second mobile stations that transmit the channel-quality-indicator reports to the base station at a second regular cycle. The radio resource management apparatus may further include a mobile station classifier adapted for classifying the multiple first mobile stations and the multiple second mobile stations into multiple mobile station groups in such a manner that multiple first mobile stations that use the same resource unit group for sending the channel-quality-indicator reports to the base station periodically and multiple second mobile stations that use a resource unit group that is at least partially the same as the resource unit group used by the first mobile stations for sending the channel-quality-indicator reports to the base station periodically belong to a mobile station group. The latest-released cyclic-shift-code storage unit may store the latest released cyclic shift code released latest by the cyclic-shift-code releaser, as a common latest released cyclic shift code that is common to the first mobile stations and the second mobile stations belonging to a mobile station group including a mobile station for which the latest released cyclic shift code is released latest by the cyclic-shift-code releaser. The cyclic-shift-code allocator may be adapted for newly allocating a new cyclic shift code to a channel-quality-indicator report from a first mobile station to the base station for a communication that newly occurs between the base station and the first mobile station, the new cyclic shift code having a precedence ranking that is lower than a precedence ranking of the latest released cyclic shift code that is common to the mobile station group to which the first mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence.

In this embodiment, the latest-released cyclic-shift-code storage unit stores the latest released cyclic shift code that is common to a mobile station group constituted of multiple mobile stations that will share the same resource unit group periodically, and when a cyclic shift code is newly allocated to a first mobile station of which the transmission cycle of the channel-quality-indicator report is shorter, a new cyclic shift code is allocated to the first mobile station in the step of allocating, the new cyclic shift code having a precedence ranking that is lower than a precedence ranking of the latest released cyclic shift code that is common to the mobile station group to which the first mobile station is to belong. Thus, by managing the latest released cyclic shift code that is common to a mobile station group constituted of multiple mobile stations that will share the same resource unit group periodically, it is possible that the same cyclic shift code is prevented from being allocated to multiple mobile stations belonging to each single mobile station group.

The cyclic-shift-code allocator may be adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest released cyclic shift code that is common to the mobile station group to which the second mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence. By managing the latest released cyclic shift code that is common to a mobile station group constituted of multiple mobile stations that will share the same resource unit group periodically, it is possible that the same cyclic shift code is prevented from being allocated to multiple mobile stations belonging to each single mobile station group.

When the first regular cycle at which multiple first mobile stations send the channel-quality-indicator reports to the base station is shorter than the second regular cycle at which multiple second mobile stations send the channel-quality-indicator reports to the base station, the resource unit group designator may be adapted for selecting, when a communication newly occurs between the base station and a second mobile station, an uplink resource unit group for which the number of used cyclic shift codes used for channel-quality-indicator reports from other mobile stations is minimum from among multiple uplink resource unit groups that can be allocated to the channel-quality-indicator report from the second mobile station. The cyclic-shift-code allocator may be adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest released cyclic shift code that is common to the mobile station group to which the second mobile station to which the new cyclic shift code is to be allocated is to belong, the new cyclic shift code being not used for channel-quality-indicator reports from other mobile stations among cyclic shift codes for the resource unit group selected by the resource unit group designator, and the new cyclic shift code having a highest precedence ranking in the predetermined order of precedence.

In this case, by selecting a resource unit group for which the number of used cyclic shift codes used for channel-quality-indicator reports from other mobile stations is minimum, the resource unit group that is less likely to be interfered with channel-quality-indicator reports from other mobile stations can be designated to the second mobile station of which the transmission cycle of the channel-quality-indicator report is longer. The longer transmission cycle means that once the receiving side fails to receive, a long period is necessary before successful reception. By designating a resource unit group that is less likely to be interfered with channel-quality-indicator reports from other mobile stations to the second mobile station, it is possible to increase certainty of successful reception, at the base station, of the channel-quality-indicator report from the second mobile station of which the transmission cycle is longer. In addition, when a cyclic shift code is newly allocated to a second mobile station of which the transmission cycle of the channel-quality-indicator report is longer, the cyclic-shift-code allocator allocates a new cyclic shift code to the second mobile station, the new cyclic shift code having a precedence ranking that is lower than a precedence ranking of the latest released cyclic shift code that is common to the mobile station group to which the second mobile station is to belong. By managing the latest released cyclic shift code that is common to a mobile station group constituted of multiple mobile stations that will share the same resource unit group periodically, it is possible that the same cyclic shift code is prevented from being allocated to multiple mobile stations belonging to each single mobile station group.

According to the present invention, a radio resource management method is used in a system in which a base station communicates with multiple mobile stations in accordance with orthogonal frequency division multiple access, multiple mobile stations modulate channel-quality-indicator reports by different cyclic shift codes for reporting channel quality indicators corresponding to reception qualities at the mobile base stations to the base station, respectively, and uplink the modulated channel-quality-indicator reports by using resource units specified by frequency and time. The radio resource management method manages radio resources used for the channel-quality-indicator reports. The radio resource management method includes the steps of: newly designating, when a communication newly occurs between the base station and a mobile station, an uplink resource unit group in a frequency band having periodicity, so that the mobile station uses the uplink resource unit group for sending a channel-quality-indicator report periodically; newly allocating a cyclic shift code to the channel-quality-indicator report from the mobile station to the base station with respect to the designated resource unit group, in accordance with a predetermined order of precedence, multiple cyclic shift codes being arranged in the predetermined order of precedence that is different from a cyclic generation order of the cyclic shift codes and that is different from a reverse order of the cyclic generation order; releasing the cyclic shift code allocated to the channel-quality-indicator report from the mobile station to the base station when the communication between the base station and the mobile station has ended or been disconnected; storing multiple used cyclic shift codes allocated by the step of allocating with respect to the designated resource unit group in such a manner that the used cyclic shift codes are associated with mobile stations to which the used cyclic shift codes are allocated; and storing a latest allocated cyclic shift code allocated latest by the step of allocating. In the step of allocating, a new cyclic shift code is newly allocated to a channel-quality-indicator report from a mobile station to the base station for a communication that newly occurs between the base station and the mobile station, the new cyclic shift code having a precedence ranking that is lower than a precedence ranking of the latest allocated cyclic shift code allocated latest for a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence.

According to the present invention, another radio resource management method is used in a system in which a base station communicates with multiple mobile stations in accordance with orthogonal frequency division multiple access, multiple mobile stations modulate channel-quality-indicator reports by different cyclic shift codes for reporting channel quality indicators corresponding to reception qualities at the mobile base stations to the base station, respectively, and uplink the modulated channel-quality-indicator reports by using resource units specified by frequency and time. The radio resource management method manages radio resources used for the channel-quality-indicator reports. The radio resource management method includes the steps of: newly designating, when a communication newly occurs between the base station and a mobile station, an uplink resource unit group in a frequency band having periodicity, so that the mobile station uses the uplink resource unit group for sending a channel-quality-indicator report periodically; newly allocating a cyclic shift code to the channel-quality-indicator report from the mobile station to the base station with respect to the designated resource unit group, in accordance with a predetermined order of precedence, multiple cyclic shift codes being arranged in the predetermined order of precedence that is different from a cyclic generation order of the cyclic shift codes and that is different from a reverse order of the cyclic generation order; releasing the cyclic shift code allocated to the channel-quality-indicator report from the mobile station to the base station when the communication between the base station and the mobile station has ended or been disconnected; storing multiple used cyclic shift codes allocated by the step of allocating with respect to the designated resource unit group in such a manner that the used cyclic shift codes are associated with mobile stations to which the used cyclic shift codes are allocated; and storing a latest released cyclic shift code released latest by the step of releasing. In the step of allocating, a new cyclic shift code is newly allocated to a channel-quality-indicator report from a mobile station to the base station for a communication that newly occurs between the base station and the mobile station, the new cyclic shift code having a precedence ranking that is lower than a precedence ranking of the latest released cyclic shift code released latest from a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence.

### BRIEF DESCRIPTION OF THE DRAWINGS

Fig. 1 is a schematic view showing a communication system in which a radio resource management method according to the present invention is applied;
Fig. 2 is an information flow diagram showing a procedure for reporting the channel quality indicator executed in the communication system shown in Fig. 1;
Fig. 3 is a schematic view showing radio resources that can be allocated to mobile stations for reporting the channel quality indicator;
Fig. 4A is a diagram showing an example of a set of cyclic shift codes that can be allocated, for each resource unit, to mobile stations for reporting the channel quality indicator;
Fig. 4B is a diagram showing another example of a set of cyclic shift codes that can be allocated, for each resource unit, to mobile stations for reporting the channel quality indicator;
Fig. 4C is a diagram showing another example of a set of cyclic shift codes that can be allocated, for each resource unit, to mobile stations for reporting the channel quality indicator;
Fig. 5 is an information flow diagram showing a procedure executed in the communication system shown in Fig. 1 for confirming continuation of a communication;
Fig. 6 is a block diagram showing a base station that is an example of a radio resource management apparatus according to a first embodiment of the present invention;
Fig. 7 is a diagram showing examples of contents of a code-usage management table managed by the base station in Fig. 6;
Fig. 8 is a diagram showing examples of contents of a latest-allocation management table managed by the base station in Fig. 6;
Fig. 9 is a diagram used for describing a specific example of a radio resource management method according to the first embodiment of the present invention;
Fig. 10 is a block diagram showing a base station that is an example of a radio resource management apparatus according to a second embodiment of the present invention;
Fig. 11 is a diagram showing examples of contents of a latest-release management table managed by the base station in Fig. 10; and
Fig. 12 is a diagram used for describing a specific example of a radio resource management method according to the second embodiment of the present invention.

### DESCRIPTION OF EMBODIMENTS

With reference to the accompanying drawings, various embodiments according to the present invention will be described hereinafter.

### Basic Structure and Basic Operation

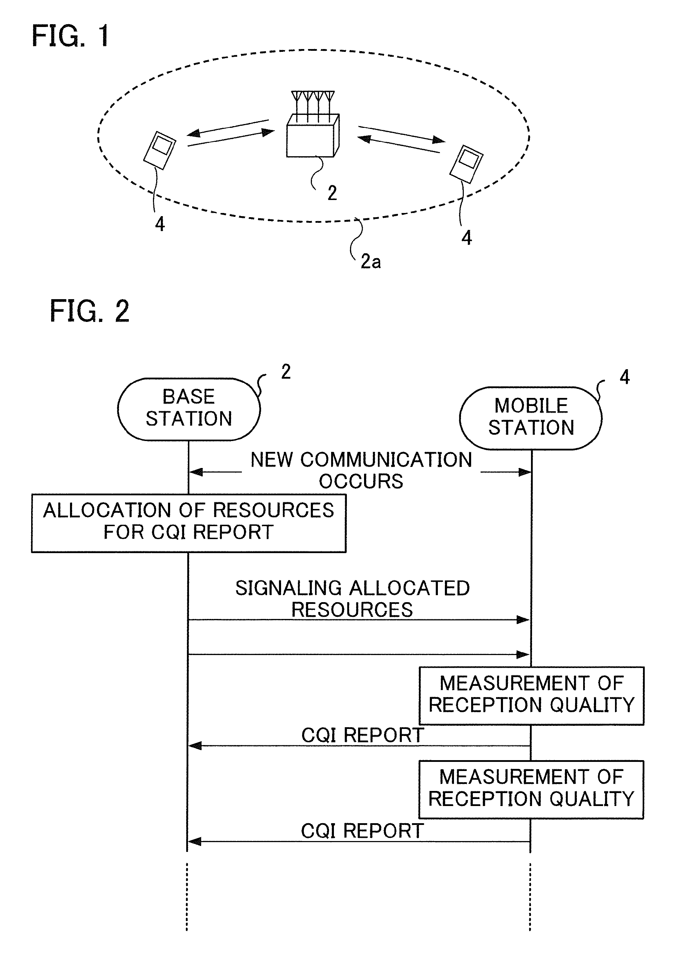

As shown in Fig. 1, a communication system in which a management method according to the present invention is applied includes a base station 2 and multiple mobile stations 4 that are located in a cell 2a of the base station 2 and communicate with the base station 2. For simplicity of description, Fig. 1 illustrates only a single base station 2 and two mobile stations 4, but in fact, a communication system is provided with multiple base stations 2 and accommodates more mobile stations 4.

The base station 2 may be, for example, an eNB (evolved Node B) in UMTS LTE, and the mobile station 4 may be, for example, a UE (User Equipment) in UMTS LTE. OFDMA is used for downlink modulation whereas SC-FDMA is used for uplink modulation.

In communication systems in accordance with UMTS LTE, scheduling in which radio resources are allocated to each mobile station that is the destination is conducted for downlink data transmission. As described above, scheduling is classified into dynamic scheduling (DS) and semi-persistent scheduling (SPS). In any of these types of downlink scheduling, each mobile station measures reception quality (channel quality) of reference signals sent from the base station, and reports a channel quality indicator (CQI) corresponding to the reception quality of the reference signals at the mobile station to the base station. On the basis of CQIs sent from mobile stations, the base station allocates radio resources to each mobile station for downlink data transmission.

As shown in Fig. 2, when a new communication occurs between the base station 2 and a mobile station 4, the base station 2 allocates radio resources to the mobile station 4, so that the mobile station 4 sends a CQI report (channel-quality-indicator report) to the base station 2. The base station 2 signals the allocated radio resources to the mobile station 4. The mobile station 4 periodically measures channel quality and sends the CQI report periodically to the base station 2 using the allocated radio resources.

Although not shown in Fig. 2, on the basis of the CQIs sent from mobile stations 4, the base station 2 allocates radio resources for downlink data transmission to each mobile station 4. In other words, the base station 2 allocates downlink radio resources to each mobile station 4.

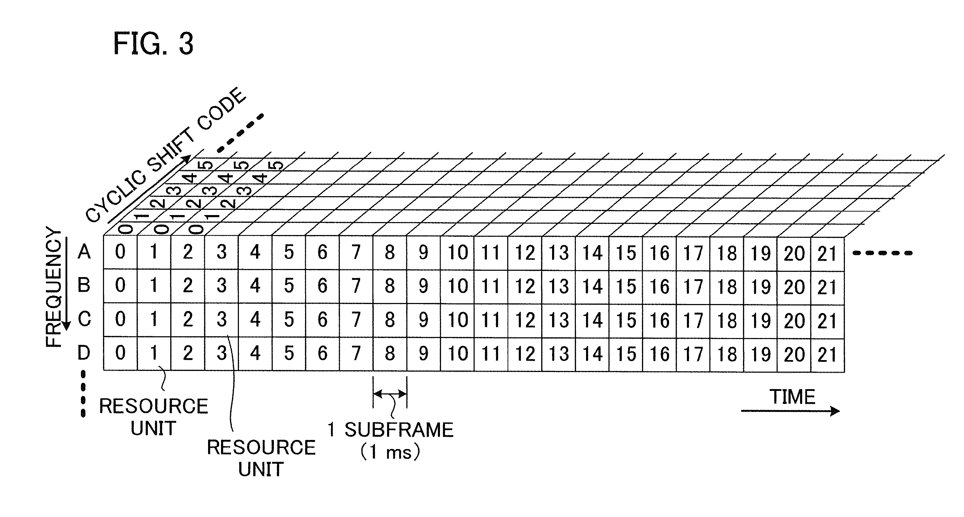

Fig. 3 is a schematic view showing radio resources allocatable to mobile stations for CQI reports. The CQI report is transmitted from each mobile station 4 to the base station 2 through, for example, the PUCCH. As shown in Fig. 3, among multiple frequency bands available for uplink transmission, for example, four frequency bands A, B, C, and D are reserved for CQI reports. Each frequency band has a width of 180 kHz.

In UMTS, a unit time length of 10 ms is referred to as a "radio frame", the base station 2 and the mobile stations 4 synchronize for each radio frame. A unit time length of 1 ms that is one-tenth of a radio frame is referred to as a subframe. Each mobile station 4 transmits a single-time CQI report by using one subframe.

In this specification, a radio resource specified by a frequency and a time utilized by the mobile station 4 for sending a single-time CQI report will be referred to as a resource unit. For example, a resource unit can be specified by a frequency band having a width of 180 kHz and a subframe. In Fig. 3, each square block specified by a frequency band and a subframe is a resource unit. However, the designer of the communication system may optionally decide which unit should be used as a resource unit for which a single-time CQI report is sent. In the following description, the width of frequency band occupied by a single resource unit is 180 kHz, and the time length of a resource unit is one subframe (1 ms). However, the width of frequency band and the time length of a resource unit are not limited to the following description.

The mobile stations 4 are classified into mobile stations mobile stations (referred to as "non-SPS mobile stations" hereinafter) to which only dynamic scheduling (DS) is always applied, and mobile stations (referred to as "SPS mobile stations" hereinafter) to which only semi-persistent scheduling (SPS) is applied or both SPS and DS are applied. Each mobile station periodically sends the CQI report corresponding to the reception quality measured by the mobile station. The transmission cycle of CQI reports from non-SPS mobile stations may be different from the transmission cycle of CQI reports from SPS mobile stations.

In the following description, the transmission cycle of CQI reports from non-SPS mobile stations is assumed to be 40 ms, i.e., 40 subframes, the transmission cycle of CQI reports from SPS mobile stations is assumed to be 10 ms, i.e., 10 subframes. Accordingly, a non-SPS mobile station transmits the CQI report by using multiple resource units (a resource unit group) at a frequency band and having a 40 ms cycle. For example, a non-SPS mobile station transmits the CQI report by using a resource unit group identified by subframe numbers 0, 40, 80, 120, 160, 200, ... and frequency band A, whereas another non-SPS mobile station transmits the CQI report by using a resource unit group identified by subframe numbers 2, 42, 82, 122, 162, 202, ... and frequency band B. In addition, an SPS mobile station transmits the CQI report by using multiple resource units (a resource unit group) at a frequency band and having a 10 ms cycle. For example, an SPS mobile station transmits the CQI report by using a resource unit group identified by subframe numbers 0, 10, 20, 30, 40, 50, ... and frequency band C, whereas another SPS mobile station transmits the CQI report by using a resource unit group identified by subframe numbers 2, 12, 32, 42, 52, ... and frequency band D. Hereinafter, SPS mobile stations of which the cycle of the CQI report is shorter may be referred to as first mobile stations, whereas non-SPS mobile stations of which the cycle of the CQI report is longer may be referred to as second mobile stations.

It is preferable that the base station 2 allocate resource unit groups that are used by mobile stations 4 for reporting the CQI to multiple mobile stations 4, in such a manner that redundant allocation of the same resource units to multiple mobile stations 4 is minimized for the reports of the channel quality indicator from the multiple mobile stations 4. However, when the base station 2 communicates with many mobile stations 4, the base station 2 cannot avoid allocating a resource unit group to multiple mobile stations 4.
In this case, the multiple mobile stations 4 modulate CQI reports by different cyclic shift codes, and transmit the modulated CQI reports to the base station 2, so that the single resource unit group is shared by the multiple mobile stations 4. The base station 2 can identify the transmission source of the received CQI report by the code used for the modulation.

In other words, as shown in Fig. 3, multiple cyclic shift codes are prepared for each subframe. Each CQI report is distinguished by the time, by the frequency band, and by the cyclic shift code.

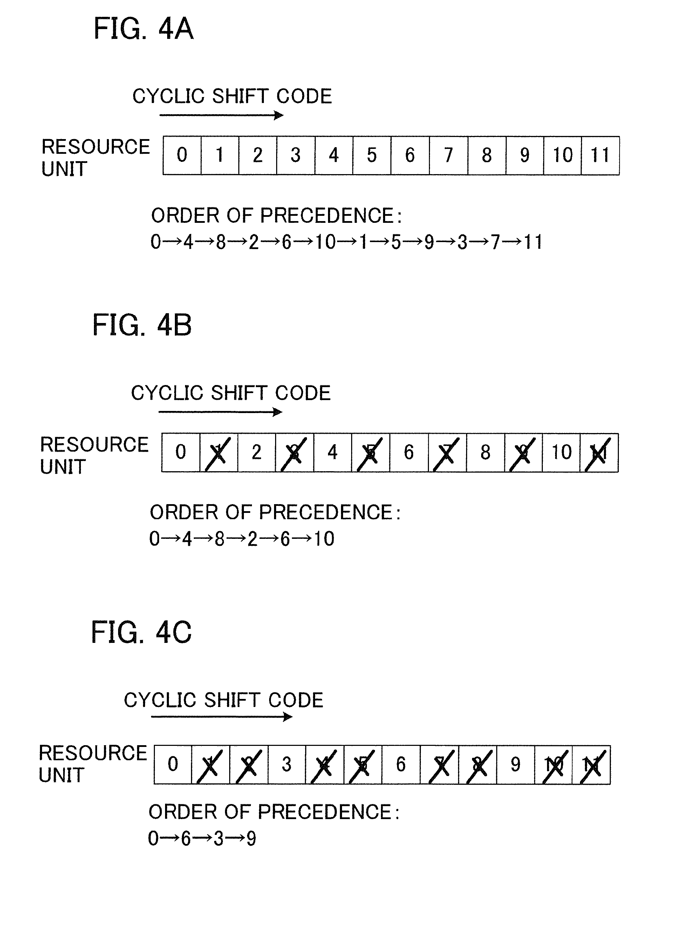

Fig. 4A is a diagram showing an example of a set of cyclic shift codes that can be allocated, for each resource unit, to mobile stations for CQI reports. In Fig. 4A, the numbers 0 to 11 affixed to cyclic shift codes are index numbers indicating a cyclic generation order of the cyclic shift codes. In the example of Fig. 4A, for each resource unit, all of 12 cyclic shift codes are available for CQI reports.

Fig. 4B is a diagram showing another example of a set of cyclic shift codes that can be allocated, for each resource unit, to mobile stations for CQI reports. In the example of Fig. 4B, for each resource unit, 6 cyclic shift codes among 12 cyclic shift codes are available for CQI reports.

Fig. 4C is a diagram showing another example of a set of cyclic shift codes that can be allocated, for each resource unit, to mobile stations for CQI reports. In the example of Fig. 4C, for each resource unit, 4 cyclic shift codes among 12 cyclic shift codes are available for CQI reports.

According to the nature of cyclic shift codes, cyclic shift codes having close index numbers resemble each other, so that a delay wave of cyclic shift code may interfere with another cyclic shift code having a close index number. Accordingly, as shown in Figs. 4B and 4C, it may be preferable that available cyclic shift codes be limited. The number of unavailable cyclic shift codes between two neighboring available cyclic shift codes is referred to as a CS guard number. In the example of Fig. 4A, the CS guard number is zero. In the example of Fig. 4B, the CS guard number is 1. In the example of Fig. 4C, the CS guard number is 2.

The designer of the communication system may optionally decide which scheme of Fig. 4A to Fig. 4C should be used, on the basis of, for example, the number of users in the communication system and other factors. Fig. 4A to Fig. 4C show the number of cyclic shift codes prepared for each resource unit and available cyclic shift codes only for the illustrative purposes. The number of cyclic shift codes prepared for each resource unit is optional, and the available cyclic shift codes can be determined in accordance with another rule.

In this communication system, an order of precedence for allocating cyclic shift codes to mobile stations is determined in advance for each single resource unit. Index numbers of cyclic shift codes are arranged in the predetermined order of precedence that is different from a cyclic generation order of the cyclic shift codes and that is different from a reverse order of the cyclic generation order. In the example of Fig. 4A, the order of precedence is 0, 4, 8, 2, 6, 10, 1, 5, 9, 3, 7, 11. In the example of Fig. 4B, the order of precedence is 0, 4, 8, 2, 6, 10. In the example of Fig. 4C, the order of precedence is 0, 6, 3, 9. In Fig. 4A to Fig. 4C, index number 0 takes precedence of all of subsequent numbers. In this specification, the "order of precedence" is a cyclical order of precedence. In other words, in the example of Fig. 4A, if the cyclic shift code having index number 7 cannot be allocated to a mobile station, the cyclic shift code having index number 0 has the next ranking.

Since multiple cyclic shift codes to be allocated to mobile stations are arranged in the predetermined order of precedence that is different from the cyclic generation order of the cyclic shift codes and that is different from the reverse order of the cyclic generation order, cyclic shift codes having close sequence numbers in the cyclic generation order are less likely to be allocated to two mobile stations. Therefore, there will be a low probability that a delay wave of a channel-quality-indicator report from a mobile station modulated by a cyclic code will interfere with another channel-quality-indicator report from another mobile station modulated by another cyclic code. Fig. 4A to Fig. 4C show the order of precedence only for illustrative purposes. It is possible to use another order of precedence in which multiple cyclic shift codes are arranged differently from the cyclic generation order and the reverse order.

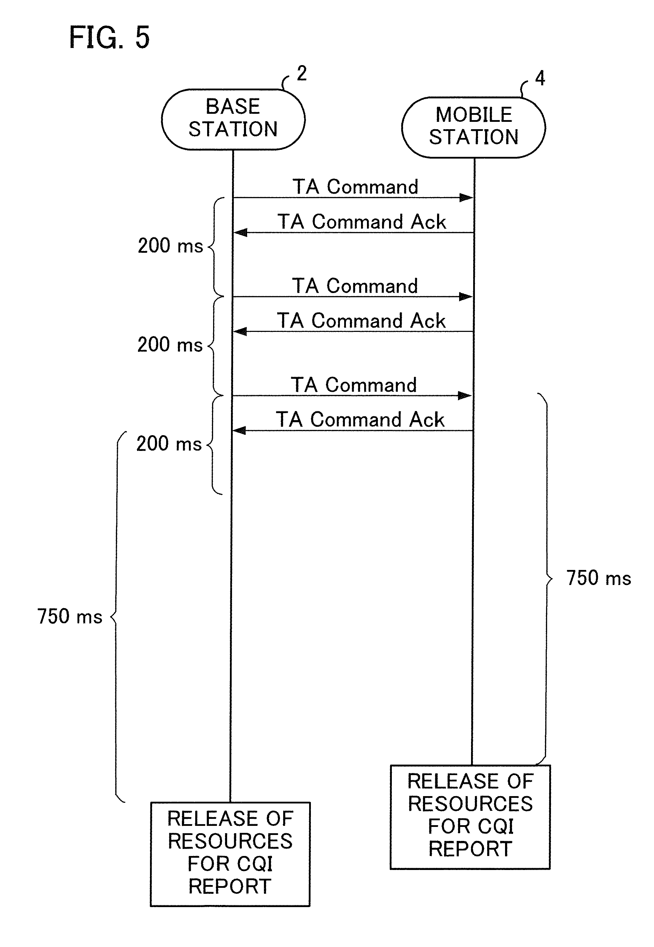

When the communication between the base station 2 and a mobile station 4 has ended or been disconnected, the radio resources allocated to the CQI report from the mobile station 4 to the base station 2 are released. This procedure will be described with reference to the information flow diagram shown in Fig. 5.

As shown in Fig. 5, during communication between the base station 2 and the mobile station 4, the base station 2 transmits a TA Command (timing adjustment command) to the mobile station 4 periodically (for example, at regular intervals of 20 msec) in order to adjust uplink transmission timing of the mobile station 4, and upon receiving the TA Command, the mobile station 4 returns a TA Command Ack (timing adjustment command acknowledgment) to the base station 2. When the base station 2 has not newly received a TA Command Ack within a certain period (for example, 750 msec) after the last reception of a TA Command Ack, the base station 2 releases radio resources (resource unit group specified by a frequency band and cyclical subframes, and a cyclic shift code) allocated for the CQI report from the mobile station 4. The released cyclic shift code may be allocated to another mobile station that is to use the resource unit group for sending the CQI report. On the other hand, when the mobile station 4 has not newly received a TA Command within a certain period (for example, 750 msec) after the last reception of a TA Command, the mobile station 4 releases the radio resources (resource unit group specified by a frequency band and cyclical subframes, and a cyclic shift code) allocated for the CQI report from the mobile station 4.

As described above, depending on the radiowave environment between the base station 2 and the mobile station 4, there is a likelihood that, whereas the mobile station 4 can receive the downlink TA Command, the base station 2 cannot receive the uplink TA Command Ack. In this case, the base station 2 releases the cyclic shift code significantly in advance of the release thereof by the mobile station 4.

### First Embodiment

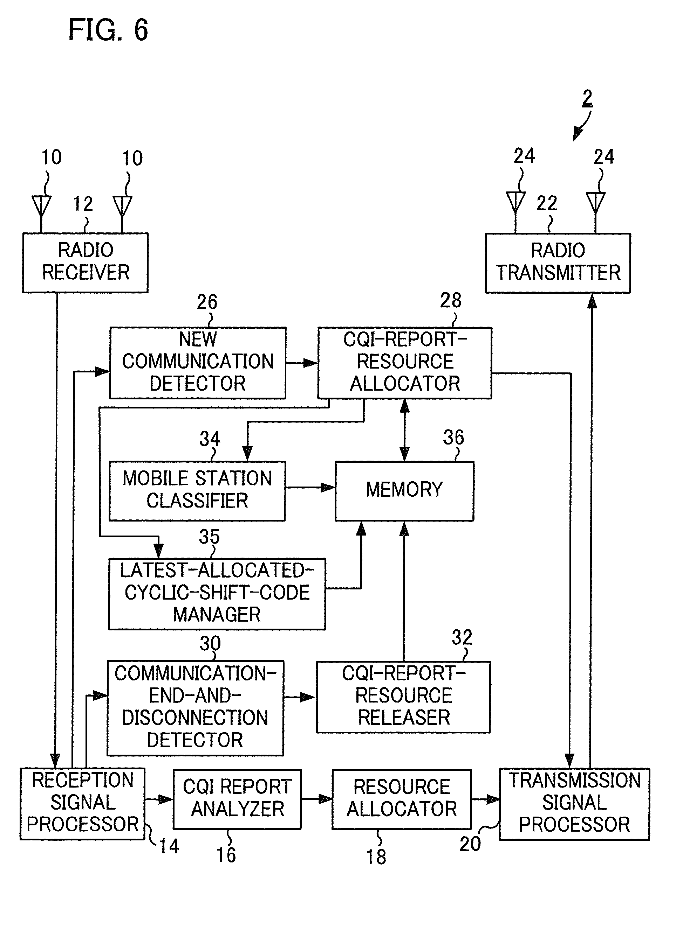

Fig. 6 is a block diagram showing a radio resource management apparatus according to a first embodiment of the present invention. In this embodiment, the radio resource management apparatus is the base station 2. However, the radio resource management apparatus may be another network device communicable with the base station 2.

As shown in Fig. 6, the base station 2 includes reception antennas 10, a radio receiver 12, a reception signal processor 14, a CQI report analyzer 16, a resource allocator 18, a transmission signal processor 20, a radio transmitter 22, a transmission antennas 24, a new communication detector 26, a CQI-report-resource allocator 28, a communication-end-and-disconnection detector 30, a CQI-report-resource releaser 32, a mobile station classifier 34, a latest-allocated-cyclic-shift-code manager 35, and a memory 36.

The reception antennas 10 receive radiowaves from mobile stations 4. The radio receiver 12 is a reception circuit for converting radiowaves received at the reception antennas 10 to electrical signals. The radio transmitter 22 is a transmission circuit for converting electrical signals to radiowaves. The transmission antennas 24 send the radiowaves transformed by the radio transmitter 22 to the mobile stations 4.

The reception signal processor 14, CQI report analyzer 16, resource allocator 18, transmission signal processor 20, new communication detector 26, CQI-report-resource allocator 28, communication-end-and-disconnection detector 30, CQI-report-resource releaser 32, mobile station classifier 34, and latest-allocated-cyclic-shift-code manager 35 are functional blocks accomplished by the fact that the CPU (central processing unit, not shown) of the base station 2 executes a computer program and operates in accordance with the computer program.

The reception signal processor 14 processes electrical signals from the radio receiver 12. The CQI report analyzer 16 analyzes CQI reports processed by the reception signal processor 14 to identify the mobile station 4 that is the transmission source of each CQI report and the reception quality at the mobile station 4 described in each CQI report. On the basis of analysis results by the CQI report analyzer 16, the resource allocator 18 allocates downlink radio resources to mobile stations 4. Radio resources allocated by the resource allocator 18 are radio resources for downlink data communication. The resource allocator 18 controls the transmission signal processor 20 so that the transmission signal processor 20 conducts downlink data communication in accordance with radio resource allocation by the resource allocator 18.

The new communication detector 26 detects, by means of a signal processed by the reception signal processor 14, that a communication request has been issued from a mobile station 4 located in the cell of the base station 2. The new communication detector 26 also detects that another network device has issued a request for communication to a mobile station 4 located in the cell of the base station 2.

When new communication detector 26 detects a new communication request (when a new communication occurs between the base station 2 and a mobile station 4), the CQI-report-resource allocator (resource unit group designator, cyclic-shift-code allocator) 28 allocates uplink radio resources to the mobile station 4 so that the mobile station 4 can send the CQI report periodically. More specifically, the CQI-report-resource allocator first serves as a resource unit group designator, and newly designates an uplink resource unit group in a frequency band having periodicity as the resource unit group for the CQI report of the mobile station 4. Next, the CQI-report-resource allocator serves as a cyclic-shift-code allocator, and newly allocates a cyclic shift code to the CQI report from the mobile station 4 to the base station 2 with respect to the designated resource unit group in accordance with the above-described predetermined order of precedence. The uplink radio resources allocation by the CQI-report-resource allocator 28 will be described later in more detail.

The CQI-report-resource allocator 28 imparts the uplink radio resources (the combination of a resource unit group specified by a frequency band and cyclical subframes, and a cyclic shift code) for the CQI report allocated by the CQI-report-resource allocator 28 to the transmission signal processor 20 in order to inform the mobile station of the uplink radio resources. The transmission signal processor 20 includes information indicating the radio resources in a transmission signal destined for the mobile station.

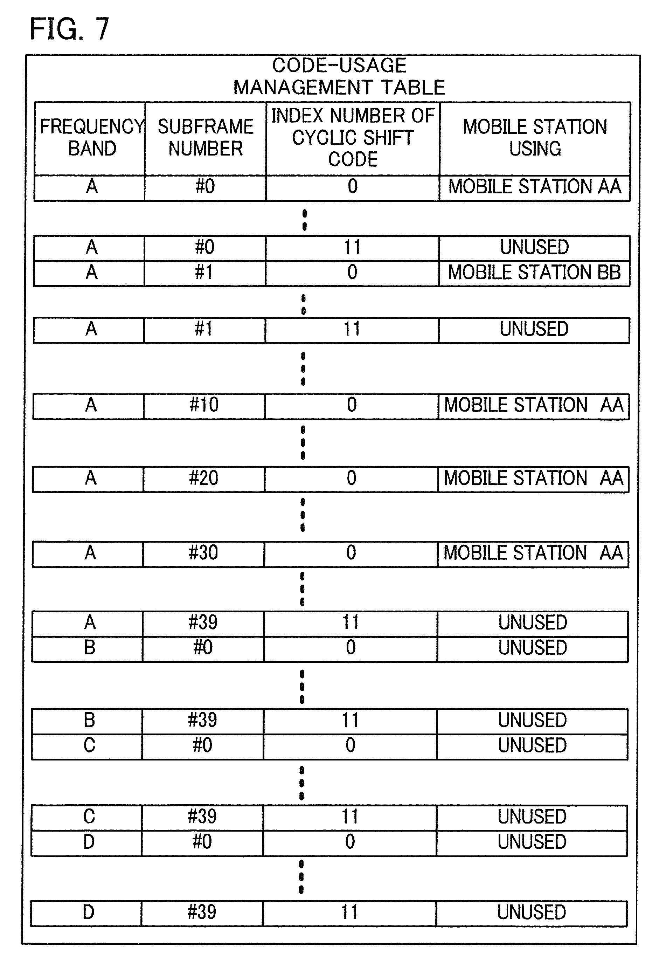

In addition, the CQI-report-resource allocator 28 stores, in a code-usage management table (see Fig. 7) of the memory (used cyclic-shift-code storage unit) 36, a combination of uplink radio resources for the CQI report allocated by the CQI-report-resource allocator 28 and the corresponding mobile station, in which the uplink radio resources are a combination of the resource unit group specified by the frequency band and cyclical subframes and the cyclic shift code. Whenever radio resources are allocated to mobile stations, the CQI-report-resource allocator 28 conducts this recording into the memory 36. As a result, the CQI-report-resource allocator 28 stores, in the memory 36, the multiple used cyclic shift codes allocated by the CQI-report-resource allocator 28 for CQI reports with respect to the resource unit group designated for CQI reports, in such a manner that the multiple used cyclic shift codes are associated with mobile stations to which the used cyclic shift codes are allocated, respectively.

Fig. 7 is a diagram showing examples of contents of the code-usage management table managed by the base station 2 and stored in the memory 36. Whenever the CQI-report-resource allocator 28 allocates radio resources CQI reports to mobile stations, the allocated radio resources (the frequency band, the cyclical subframes, and the cyclic shift code) and the corresponding mobile station are recorded. For radio resources that are not being used by any mobile stations, information indicative of "unused" is recorded. In this code-usage management table, records for 40 subframes #0 to #39 for each of frequency bands A, B, C, and D are provided. The records are tailored to 40 subframes, that is, the longer transmission cycle of the CQI report (transmission cycle of CQI report of non-SPS mobile stations). For example, if a mobile station transmits the CQI report by using a resource unit group identified by subframe numbers 0, 40, 80, 120, 160, 200, ..., it is sufficient to only write a record for subframe number 0. In other words, the subframe number (for example, 0) shown in Fig. 7 indicates a resource unit group (subframe numbers 0, 40, 80, 120, 160, 200, ...) beginning with the shown subframe number of which the cycle is 40 subframes. In this code-usage management table, records for 12 cyclic shift codes (index numbers 0 to 11) for each subframe number for each frequency band.

For SPS mobile stations of which the transmission cycle of the CQI report is 10 subframes, the CQI-report-resource allocator 28 writes, into the code-usage management table, that the same code is used by the same mobile station at the same frequency band at regular intervals of 10 subframes. For example, as shown in Fig. 7, in the code-usage management table, the fact that a mobile station AA (SPS mobile station) consistently uses cyclic shift code 0 at frequency band A and at subframes #0, #10, #20, and #30 is recorded.

The communication-end-and-disconnection detector 30 detects the end or disconnection of existing communication with a mobile station 4. More specifically, the communication-end-and-disconnection detector 30 recognizes the TA Command Ack among signals processed by the reception signal processor 14. The communication-end-and-disconnection detector 30 determines that existing communication has ended or been disconnected if the base station has not newly received a TA Command Ack within a certain period after the last reception of a TA Command Ack, and specifies the mobile station with which the communication has ended or been disconnected (see Fig. 5).

In case in which the communication-end-and-disconnection detector 30 detects the end or disconnection of existing communication, the CQI-report-resource releaser (cyclic-shift-code releaser) 32 releases the radio resources (a combination of the resource unit group specified by a frequency band and a cyclical subframes and a cyclic shift code) allocated to the CQI report to the base station 2 from the mobile station with which the communication has ended or been disconnected. Thus, the CQI-report-resource releaser 32 releases the cyclic shift code allocated to the CQI report to the base station 2 from a mobile station when the communication between the base station 2 and the mobile station has ended or been disconnected.

In addition, the CQI-report-resource releaser 32 resets the record, in the code-usage management table (see Fig. 7) of the memory (used cyclic-shift-code storage unit) 36, with respect to the released radio resources (a combination of the resource unit group specified by a frequency band and a cyclical subframes and a cyclic shift code) to the information indicative of "unused".

When the CQI-report-resource allocator 28 has allocated uplink radio resources (a combination of the resource unit group specified by a frequency band and a cyclical subframes and a cyclic shift code) for CQI report to a mobile station, the mobile station classifier 34 classifies the mobile station into one of multiple mobile station groups. The mobile station classifier 34 conducts this classification whenever radio resources have been allocated to mobile stations. As a result, the mobile station classifier 34 classifies multiple mobile stations with which the base station 2 communicates into multiple mobile station groups. Whenever the classification is conducted, the mobile station classifier 34 records the classification result into the memory 36.

The scheme for classification is that multiple SPS mobile station (first mobile stations) that use the same resource unit group (but, use different cyclic shift codes) for sending the CQI reports to the base station 2 periodically and multiple non-SPS mobile stations (second mobile stations) that use a resource unit group that is partially the same as the resource unit group used by the SPS mobile stations for sending the CQI reports to the base station 2 periodically belong to a mobile station group.

For example, SPS mobile stations that use a resource unit group identified by subframe numbers 0, 10, 20, 30, 40, 50, ... (the resource unit group is represented by subframe numbers #0, #10, #20, and #30 in Fig. 7) at frequency band A for sending CQI reports are classified into mobile station group #1. Also, non-SPS mobile stations that use a resource unit group identified by subframe numbers 0, 40, 80, 120, 160, 200, ... (the resource unit group is represented by subframe number #0 in Fig. 7) at frequency band A for sending CQI reports are classified into the same mobile station group #1. This is because those SPS mobile stations and non-SPS mobile stations use partially the same resources 0, 40, 80, ... for sending the CQI reports to the base station 2. Furthermore, non-SPS mobile stations that use a resource unit group identified by subframe numbers 10, 50, 90, 130, 170, 210,... at frequency band A for sending CQI reports are also classified into the same mobile station group #1. Non-SPS mobile stations that use a resource unit group identified by subframe numbers 20, 60, 100, 140, 180, 220, ... at frequency band A for sending CQI reports are also classified into the same mobile station group #1. Non-SPS mobile stations that use a resource unit group identified by subframe numbers 30, 70, 110, 150, 190, 220, ... at frequency band A for sending CQI reports are also classified into the same mobile station group #1.

Similarly, SPS mobile stations that use a resource unit group identified by subframe numbers 1, 11, 21, 31, 41, 5 1, ... at frequency band A for sending CQI reports are classified into mobile station group #2. In addition, non-SPS mobile stations that use a resource unit group identified by subframe numbers 1, 41, 81, 121, 161, 201, ... at frequency band A for sending CQI reports are classified into the same mobile station group #2. This is because those SPS mobile stations and non-SPS mobile stations use partially the same resources 1, 41, 81, ... for sending the CQI reports to the base station 2. Furthermore, non-SPS mobile stations that use a resource unit group identified by subframe numbers 11, 51, 91, 131, 171, 211, ... at frequency band A for sending CQI reports are also classified into the same mobile station group #2. Non-SPS mobile stations that use a resource unit group identified by subframe numbers 21, 61, 101, 141, 181, 221, ... at frequency band A for sending CQI reports are also classified into the same mobile station group #2. Non-SPS mobile stations that use a resource unit group identified by sub frame numbers 31, 71, 111, 151, 191, 221, ... at frequency band A for sending CQI reports are also classified into the same mobile station group #2.

Similarly, SPS mobile stations that use a resource unit group identified by subframe numbers 9, 19, 29, 39, 49, 59, ... at frequency band A for sending CQI reports are classified into mobile station group #10. In addition, non-SPS mobile stations that use a resource unit group identified by subframe numbers 9, 49, 89, 129, 169, 209, ... at frequency band A for sending CQI reports are classified into the same mobile station group #10. This is because those SPS mobile stations and non-SPS mobile stations use partially the same resources 9, 49, 89, ... for sending the CQI reports to the base station 2. Furthermore, non-SPS mobile stations that use a resource unit group identified by subframe numbers 91, 59, 99, 139, 179, 219, ... at frequency band A for sending CQI reports are also classified into the same mobile station group #10. Non-SPS mobile stations that use a resource unit group identified by subframe numbers 29, 69, 109, 149, 189, 229, ... at frequency band A for sending CQI reports are also classified into the same mobile station group #10. Non-SPS mobile stations that use a resource unit group identified by subframe numbers 39, 79, 119, 159, 199, 229, ... at frequency band A for sending CQI reports are also classified into the same mobile station group #10.

Let us assume the transmission cycle of CQI reports of non-SPS mobile stations is T_{A}, the transmission cycle of CQI reports of SPS mobile stations is T_{B}, and the time length of each resource unit is L_{R}. The number β of mobile station groups per frequency band is the least number of T_{A}/L_{R} and T_{B}/L_{R}. In this embodiment, T_{A} = 40 ms, T_{B} = 10 ms, and L_{R} = 1ms, and thus the number β of mobile station groups per frequency band is 10. Since four frequency bands A, B, C and D are reserved for CQI reports, the total number of mobile station groups in the whole system is 4β, i.e., 40.

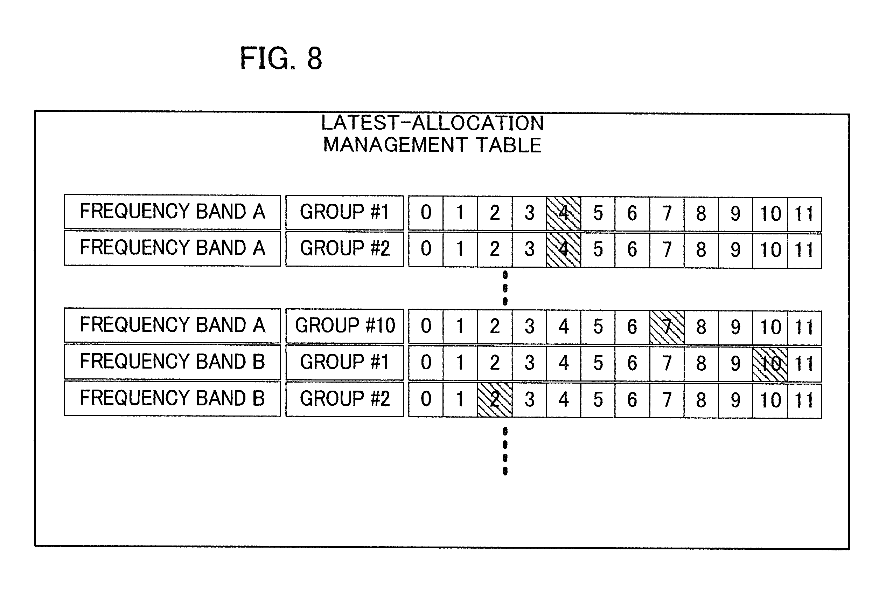

The latest-allocated-cyclic-shift-code manager 35 records, into a latest-allocation management table (see Fig. 8) of the memory (latest-allocated cyclic-shift-code storage unit) 36, a cyclic shift code allocated latest by the CQI-report-resource allocator 28 (the latest allocated cyclic shift code). Fig. 8 is a diagram showing examples of contents of the latest-allocation management table managed by the base station 2 and stored in the memory 36. In Fig. 8, groups #1 to #10 represent the above-mentioned mobile station groups resulting from classification by the mobile station classifier 34. Numerals 0 to 11 represent the index numbers of cyclic shift codes. In Fig. 8, hatching denotes the cyclic shift code allocated latest by the CQI-report-resource allocator 28 for the frequency band and the mobile station group. In Fig. 8, the latest allocated cyclic shift code are hatched for the purpose of facilitating understanding, but in the actual latest-allocation management table, only the index number of the latest allocated cyclic shift code for the frequency band and the mobile station group is stored.

Whenever the CQI-report-resource allocator 28 has allocated radio resources to mobile stations for CQI reports, the latest-allocation management table is updated by the latest-allocated-cyclic-shift-code manager 35. More specifically, when the CQI-report-resource allocator 28 has allocated radio resources to a mobile station for CQI report, the latest-allocated-cyclic-shift-code manager 35 records, in to the latest-allocation management table, the latest allocated cyclic shift code allocated latest by the CQI-report-resource allocator 28 as a common latest allocated cyclic shift code that is common to all of the mobile stations (including non-SPS mobile stations and SPS mobile stations) belonging to a mobile station group utilizing the same resource unit group as those which will be used by the mobile station to which radio resources are allocated latest by the CQI-report-resource allocator 28. For example, let us assume that the CQI-report-resource allocator 28 has designated frequency band A and subframe number 0 for a mobile station and has allocated a cyclic shift code having index number 4 to the mobile station. The mobile station classifier 34 classifies the mobile station to mobile station group #1, as described above. Then, the latest-allocated-cyclic-shift-code manager 35 records, into the latest-allocation management table, the cyclic shift code having index number 4 as the common latest allocated cyclic shift code that is common to mobile stations belonging to mobile station group #1 for frequency band A.

Next, allocation of uplink radio resources by the CQI-report-resource allocator 28 will be described in more detail. First, allocation of radio resources to SPS mobile stations (first mobile stations) of which the transmission cycle of CQI report is shorter will be described.

When the new communication detector 26 detects a new communication request with regard to an SPS mobile station, the CQI-report-resource allocator (resource unit group designator) 28 refers to the code-usage management table (see Fig. 7) of the memory 36, and selects (i.e., designates) a resource unit group having the lowest usage ratio of cyclic shift codes and the highest favorable ranking for the CQI report of the SPS mobile station. The usage ratio of cyclic shift codes is the ratio of the number of currently used cyclic shift codes to the total number of cyclic shift codes available for CQI reports in each resource unit group (in the example of Fig. 4A, the total number is 12). Since the transmission cycle of CQI reports of SPS mobile stations is 10 subframes, the CQI-report-resource allocator 28 calculates the usage ratio of cyclic shift codes in each resource unit group constituted of 4 sub frames (for example, sub frames #0, #10, #20, and #30) in the code-usage management table for the selection of a resource unit group. Since the total number of cyclic shift codes available for CQI reports is constant, "the lowest usage ratio of cyclic shift codes" is equivalent to that the number of cyclic shift codes having been used for CQI reports from other mobile station is the minimum. Accordingly, the CQI-report-resource allocator 28 may obtain the number of cyclic shift codes having been used in each group. The "favorable ranking" of resource unit group is defined as follows. In each frequency band, the lesser the subframe number, the higher the favorable ranking. In addition, the favorable ranking of frequency band A is higher than that of frequency band B. The favorable ranking of frequency band B is higher than that of frequency band C that is higher than that of frequency band D.

When the base station 2 first communicates with a mobile station after deployment of the base station 2, all cyclic shift codes in all resource units have not been used. This is also true when the base station 2 first communicates with a mobile station after reboot of the base station 2. In such a case, the CQI-report-resource allocator 28 (resource unit group designator) selects (i.e., designates), for the CQI report of the SPS mobile station, the resource unit group with the highest favorable ranking that includes sub frames #0, #10, #20, and #30 having the cycle of 10 sub frames at frequency band A.

After designation of the uplink resource unit group having periodicity at a frequency band as the resource unit group for the CQI report of an SPS mobile station, the CQI-report-resource allocator (cyclic-shift-code allocator) 28 allocates a cyclic shift code with regard to the designated resource unit group to the CQI report from the SPS mobile station to the base station 2 in accordance with the above-mentioned predetermined order of precedence. More specifically, the CQI-report-resource allocator 28 refers to the latest-allocation management table (Fig. 8) and the code-usage management table (Fig. 7), and newly allocates a new cyclic shift code to the CQI report from the SPS mobile station to the base station 2, the new cyclic shift code having a precedence ranking that is lower than the precedence ranking of the latest allocated cyclic shift code that is common to the mobile station group to which the SPS mobile station to which the new cyclic shift code is to be allocated is to belong, the new cyclic shift code being not used for CQI reports from other mobile stations belonging to the mobile station group, and the new cyclic shift code having the highest precedence ranking in the predetermined order of precedence.

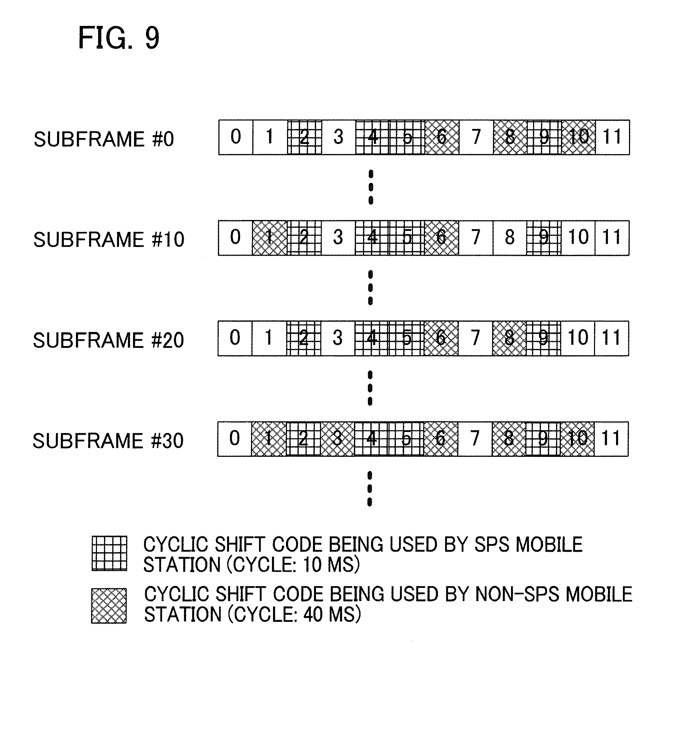

With reference to Fig. 9, the allocation of the cyclic shift code will be described in more detail. Let us assume that the CQI-report-resource allocator 28 has designated the resource unit group that includes subframes #0, #10, #20, and #30 having the cycle of 10 subframes at frequency band A for the CQI report of the SPS mobile station. The mobile station group to which the SPS mobile station will belong is mobile station group #1, and let us assume that the common latest allocated cyclic shift code that is common to mobile station group #1 for frequency band A has index number 4. In the example of Fig. 9, as similar to the example of Fig. 4A, all of 12 cyclic shift codes are available for CQI reports in each resource unit. However, as shown in Fig. 9, some cyclic shift codes have been used for CQI reports from other mobile stations in each of subframes #0, #10, #20, and #30. In other words, some cyclic shift codes have been used for CQI reports from other mobile stations belonging to mobile station group #1.

As described above with reference to Fig. 4A, in the example in which all 12 cyclic shift codes are available for CQI reports, the order of preference is 0, 4, 8, 2, 6, 10, 1, 5, 9, 3, 7, 11. The index number of the common latest allocated cyclic shift code that is common to mobile station group #1 is 4, and therefore, let us focus on 8 that is at the next precedence ranking. However, since the cyclic shift code having index number 8 is used by other mobile stations at subframes #0, #20, and #30, let us focus on 2 that is at the next precedence ranking. However, since the cyclic shift code having index number 2 is used by other mobile stations at subframes #0, #10, #20, and #30, let us focus on 6 that is at the next precedence ranking. However, since the cyclic shift code having index number 6 is used by other mobile stations at subframes #0, #10, #20, and #30, let us focus on 10 that is at the next precedence ranking. However, since the cyclic shift code having index number 10 is used by other mobile stations at subframes #0 and #30, let us focus on 1 that is at the next cyclic precedence ranking. Thus, it is determined that the cyclic shift code having a precedence ranking that is lower than the precedence ranking of the latest allocated cyclic shift code having index number 4, being not used for CQI reports from other mobile stations belonging to mobile station group #1, and having the highest precedence ranking is the cyclic shift code having index number 7. The CQI-report-resource allocator 28 allocates the cyclic shift code having index number 7 to the SPS mobile station that is to newly communicate.

If there is no cyclic shift code used for CQI reports from other mobile stations belonging to the mobile station group to which the SPS mobile station to which the new cyclic shift code is to be allocated is to belong, there is no common latest allocated cyclic shift code common to the mobile station group. In such a case, the CQI-report-resource allocator 28 allocates the cyclic shift code having the highest precedence ranking, i.e., the cyclic shift code having index number 0 to the SPS mobile station. This may happen, for example, when the base station 2 first communicates with a mobile station after deployment or reboot of the base station 2.

Next, allocation of radio resources to non-SPS mobile stations (second mobile stations) of which the transmission cycle of CQI report is longer will be described. When the new communication detector 26 detects a new communication request with regard to a non-SPS mobile station, the CQI-report-resource allocator (resource unit group designator) 28 refers to the code-usage management table (see Fig. 7) of the memory 36, and selects (i.e., designates) a resource unit group having the lowest usage ratio of cyclic shift codes and the highest favorable ranking for the CQI report of the non-SPS mobile station. Since the transmission cycle of CQI reports of non-SPS mobile stations is 40 subframes, the CQI-report-resource allocator 28 calculates the usage ratio of cyclic shift codes in each subframe (for example, subframe #0) in the code-usage management table for the selection of a resource unit group. Since the total number of cyclic shift codes available for CQI reports is constant, "the lowest usage ratio of cyclic shift codes" is equivalent to the fact that the number of cyclic shift codes having been used for CQI reports from other mobile station is the minimum. Accordingly, the CQI-report-resource allocator 28 may obtain the number of cyclic shift codes having been used in each group.

When the base station 2 first communicates with a mobile station after deployment of the base station 2, all cyclic shift codes in all resource units have not been used. This is also true when the base station 2 first communicates with a mobile station after reboot of the base station 2. In such a case, the CQI-report-resource allocator 28 (resource unit group designator) selects (i.e., designates), for the CQI report of the non-SPS mobile station, the resource unit group with the highest favorable ranking that begins with subframe #0 having the cycle of 40 subframes at frequency band A.

After designation of the uplink resource unit group having periodicity at a frequency band as the resource unit group for the CQI report of a non-SPS mobile station, the CQI-report-resource allocator (cyclic-shift-code allocator) 28 allocates a cyclic shift code with regard to the designated resource unit group to the CQI report from the non-SPS mobile station to the base station 2 in accordance with the abovementioned predetermined order of precedence. More specifically, the CQI-report-resource allocator 28 refers to the latest-allocation management table (Fig. 8) and the code-usage management table (Fig. 7), and newly allocates a new cyclic shift code to the CQI report from the non-SPS mobile station to the base station 2, the new cyclic shift code having a precedence ranking that is lower than the precedence ranking of the latest allocated cyclic shift code that is common to the mobile station group to which the non-SPS mobile station to which the new cyclic shift code is to be allocated is to belong, the new cyclic shift code being not used for CQI reports from other mobile stations among cyclic shift codes for the resource unit group selected by the CQI-report-resource allocator 28, and the new cyclic shift code having the highest precedence ranking in the predetermined order of precedence.

With reference to Fig. 9, the allocation of the cyclic shift code will be described in more detail. Let us assume that the CQI-report-resource allocator 28 has designated the resource unit group that begins with subframe #10 having the cycle of 40 subframes at frequency band A for the CQI report of the non-SPS mobile station. The mobile station group to which the non-SPS mobile station will belong is mobile station group #1, and let us assume that the common latest allocated cyclic shift code that is common to mobile station group #1 for frequency band A has index number 4. In the example of Fig. 9, as similar to the example of Fig. 4A, all of 12 cyclic shift codes are available for CQI reports in each resource unit. However, as shown in Fig. 9, some cyclic shift codes have been used for CQI reports from other mobile stations in subframe #10. In other words, some cyclic shift codes have been used for CQI reports from other mobile stations among cyclic shift codes for the resource unit group selected by the CQI-report-resource allocator 28.

As described above with reference to Fig. 4A, in the example in which all 12 cyclic shift codes are available for CQI reports, the order of preference is 0, 4, 8, 2, 6, 10, 1, 5, 9, 3, 7, 11. The index number of the common latest allocated cyclic shift code that is common to mobile station group #1 is 4, and therefore, let us focus on 8, which is at the next precedence ranking. The cyclic shift code having index number 8 is not used by other mobile stations at subframe #10. Thus, it is determined that the cyclic shift code has a precedence ranking that is lower than the precedence ranking of the latest allocated cyclic shift code having index number 4, being not used for CQI reports from other mobile stations among cyclic shift codes for the resource unit group beginning with subframe #10 having the cycle of 40 subframes selected by the CQI-report-resource allocator 28, and having the highest precedence ranking, is the cyclic shift code having index number 8. The CQI-report-resource allocator 28 allocates the cyclic shift code having index number 8 to the non-SPS mobile station that is to newly communicate.

If there is no cyclic shift code used for CQI reports from other mobile stations belonging to the mobile station group to which the non-SPS mobile station to which the new cyclic shift code is to be allocated is to belong, there is no common latest allocated cyclic shift code common to the mobile station group. In such a case, the CQI-report-resource allocator 28 allocates the cyclic shift code having the highest precedence ranking, i.e., the cyclic shift code having index number 0 to the non-SPS mobile station. For example, this may happen when the base station 2 first communicates with a mobile station after deployment or reboot of the base station 2.

In the radio resources management method, when a new communication occurs between the base station and a mobile station, a cyclic code is allocated to the CQI report from the mobile station to the base station, in accordance with a predetermined order of precedence in which multiple cyclic shift codes are arranged differently from the cyclic generation order and the reverse order. The CQI-report-resource allocator 28 allocates a cyclic shift code that is not used for CQI reports from other mobile stations among cyclic shift codes for the designated resource unit group to the CQI from the mobile station to the base station for the communication that newly occurs between the base station and the mobile station. Therefore, it is possible to prevent a cyclic shift code currently used for a CQI report from another mobile station from being allocated to the new communication. In addition, the CQI-report-resource allocator 28 allocates a new cyclic shift code to the CQI report from the mobile station to the base station for the communication that newly occurs between the base station and the mobile station, the new cyclic shift code having a precedence ranking that is lower than the precedence ranking of the latest allocated cyclic shift code allocated latest for a CQI report from another mobile station, the new cyclic shift code being not used for CQI reports from other mobile stations among cyclic shift codes for the designated resource unit group, and the new cyclic shift code having the highest precedence ranking. Since this allocation is conducted whenever a new cyclic shift code is allocated to a mobile station, a cyclic shift code released a long time ago for the resource unit group can be allocated to a newly occurring communication. For CQI reports, many resource unit groups are available, and multiple cyclic shift codes are available for each of resource unit groups. It is expected that a normal resource keeping period for each mobile station is much less than a time period required for a round of allocation of cyclic shift codes to many mobile stations. Accordingly, it is extremely unlikely that a cyclic shift code released a long time ago for a single resource unit group will be coincident with a cyclic shift code for a channel-quality-indicator report that have been newly released by the base station. Furthermore, even if the latest allocated cyclic shift code were to be released by chance, and it is rewritten to indicate "unused" in the code-usage management table, the latest allocated cyclic shift code remains recorded in the latest-allocation management table. Therefore, there will be a low probability that a cyclic shift code for reporting the CQI that has been newly released by a base station will be allocated to a mobile station that is to newly communicate with the base station. Furthermore, since multiple cyclic shift codes to be allocated to mobile stations are arranged in a predetermined order of precedence that is different from the cyclic generation order of the cyclic shift codes and that is different from the reverse order of the cyclic generation order, cyclic shift codes having close sequence numbers in the cyclic generation order are less likely to be allocated to two mobile stations. Therefore, there will be a low probability that a delay wave of a CQI report from a mobile station modulated by a cyclic code will interfere with another CQI report from another mobile station modulated by another cyclic code.

The latest-allocation management table of the memory 36 stores the latest allocated cyclic shift code that is common to the mobile station group constituted of multiple mobile stations that will share the same resource unit group periodically, and when a cyclic shift code is newly allocated to a mobile station, the CQI-report-resource allocator 28 allocates the cyclic shift code to the mobile station, the cyclic shift code having a precedence ranking that is lower than the precedence ranking of the common latest allocated cyclic shift code that is common to the mobile station group to which the mobile station is to belong. Thus, by managing the latest allocated cyclic shift code that is common to a mobile station group constituted of multiple mobile stations that will share the same resource unit group periodically, it is possible that the same cyclic shift code is prevented from being allocated to multiple mobile stations belonging to each single mobile station group.

When a new communication occurs between the base station and a non-SPS mobile station, the CQI-report-resource allocator 28 selects an uplink resource unit group for which the number of used cyclic shift codes being used for CQI reports from other mobile stations is minimum from among multiple uplink resource unit groups that can be allocated to the CQI report from the non-SPS mobile station. Accordingly, the resource unit group that is less likely to be interfered with CQI reports from other mobile stations can be designated to the non-SPS mobile station of which the transmission cycle of the CQI report is longer. The longer transmission cycle means that once the receiving side fails to receive, a long period is necessary before successful reception. By designating a resource unit group that is less likely to be interfered with CQI reports from other mobile stations to the non-SPS mobile station, it is possible to increase certainty of successful reception, at the base station, of the channel-quality-indicator report from the non-SPS mobile station of which the transmission cycle is longer.

### Second Embodiment

Next, a second embodiment according to the present invention will be described. In a manner similar to the first embodiment, the second embodiment is premised on the basic structure and the basic operation described with reference to Figs. 1 to 5.

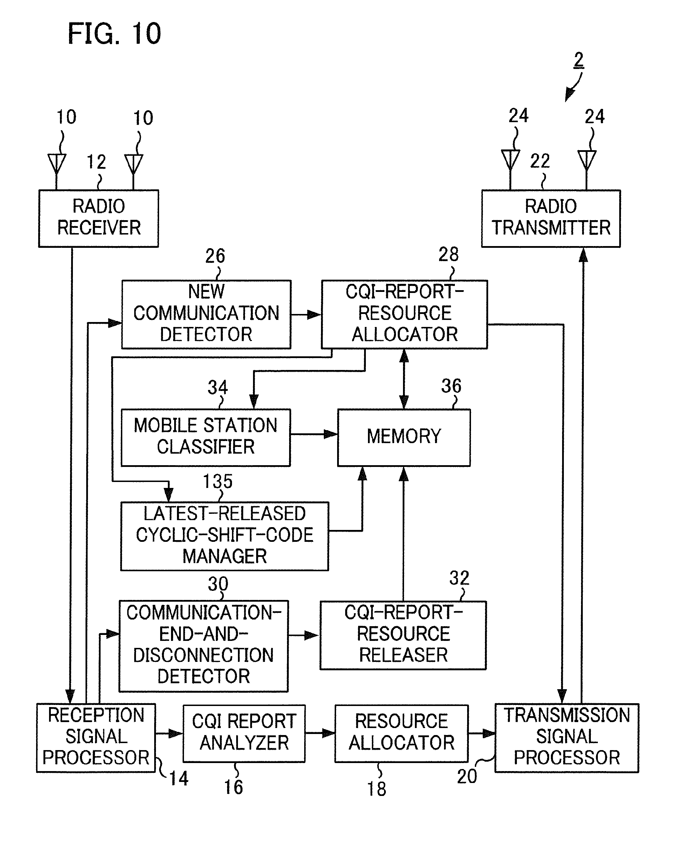

Fig. 10 is a block diagram showing a radio resource management apparatus according to a second embodiment of the present invention. In this embodiment, the radio resource management apparatus is the base station 2. However, the radio resource management apparatus may be another network device communicable with the base station 2.

The base station 2 according to the second embodiment includes a structure similar to that of the first embodiment shown in Fig. 6 and described above. The code-usage management table shown in Fig. 7 for illustrative purposes is also managed by the base station 2 according to the second embodiment. However, whereas new allocation of a cyclic shift code to a mobile station in the first embodiment is based on the common latest allocated cyclic shift code that is common to the mobile station group to which the mobile station to which the new cyclic shift code is to be allocated is to belong, new allocation of a cyclic shift code to a mobile station in the second embodiment is based on a common latest released cyclic shift code that is common to the mobile station group to which the mobile station to which the new cyclic shift code is to be allocated is to belong. Instead of the latest-allocated-cyclic-shift-code manager 35 shown in Fig. 6, the base station 2 according to the second embodiment includes a latest-released cyclic-shift-code manager 135.

In the following description, operations that are the same as those in the first embodiment will not be described, and inherent features of the second embodiment will be primarily described. When the CQI-report-resource releaser 32 has released radio resources (a combination of the resource unit group specified by a frequency band and a cyclical subframes and a cyclic shift code) allocated to the CQI report to the base station 2 from a mobile station with which the communication has ended or disconnected, the CQI-report-resource releaser 32 resets the record, in the code-usage management table of the memory (used cyclic-shift-code storage unit) 36, with respect to the released radio resources to the information indicative of "unused". Furthermore, the CQI-report-resource releaser 32 informs the latest-released cyclic-shift-code manager 135 of the released radio resources and the corresponding mobile station.

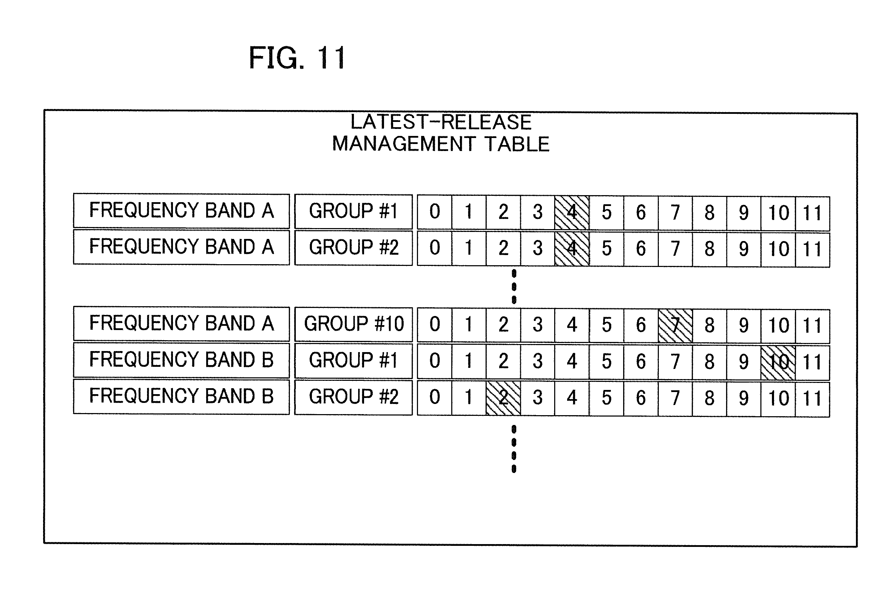

The latest-released cyclic-shift-code manager 135 records, into a latest-release management table (see Fig. 11) of the memory (latest-released cyclic-shift-code storage unit) 36, a cyclic shift code released latest by the CQI-report-resource releaser 32 (the latest released cyclic shift code). Fig. 11 is a diagram showing examples of contents of the latest-release management table managed by the base station 2 and stored in the memory 36. In Fig. 11, groups #1 to #10 represent the above-mentioned mobile station groups resulting from classification by the mobile station classifier 34. Numerals 0 to 11 represent the index numbers of cyclic shift codes. In Fig. 11, hatching denotes the cyclic shift code released latest by the CQI-report-resource releaser 32 for the frequency band and the mobile station group. In Fig. 11, the latest released cyclic shift code are hatched for the purpose of facilitating understanding, but in the actual latest-release management table, only the index number of the latest released cyclic shift code for the frequency band and the mobile station group is stored.

Whenever the CQI-report-resource releaser 32 has released radio resources for CQI reports for mobile stations, the latest-release management table is updated by the latest-released-cyclic-shift-code manager 135. More specifically, when the CQI-report-resource releaser 32 has released radio resources for CQI report of a mobile station, the latest-released-cyclic-shift-code manager 135 records, into the latest-release management table, the latest released cyclic shift code released latest by the CQI-report-resource releaser 32 as a common latest released cyclic shift code that is common to all of the mobile stations (including non-SPS mobile stations and SPS mobile stations) belonging to a mobile station group utilizing the same resource unit group as those which were used by the mobile station for which radio resources are released latest by the CQI-report-resource releaser 32. For example, let us assume that the CQI-report-resource allocator 28 has designated frequency band A and subframe number 0 for a mobile station and has allocated a cyclic shift code having index number 4 for the mobile station. The mobile station classifier 34 classifies the mobile station to mobile station group #1, as described above. Then, let us assume that the CQI-report-resource releaser 32 has released the radio resources (frequency band A, subframe number 0, and the cyclic shift code having index number 4). The latest-released-cyclic-shift-code manager 135 records, into the latest-release management table, the cyclic shift code having index number 4 as the common latest released cyclic shift code that is common to mobile stations belonging to mobile station group #1 for frequency band A.

Next, allocation of uplink radio resources by the CQI-report-resource allocator 28 will be described in more detail. First, allocation of radio resources to SPS mobile stations (first mobile stations) of which the transmission cycle of CQI report is shorter will be described.

When the new communication detector 26 detects a new communication request with regard to an SPS mobile station, in the same manner as in the first embodiment, the CQI-report-resource allocator (resource unit group designator) 28 refers to the code-usage management table (see Fig. 7) of the memory 36, and selects (i.e., designates) a resource unit group having the lowest usage ratio of cyclic shift codes (or having the lowest number of used cyclic shift codes) and the highest favorable ranking for the CQI report of the SPS mobile station.

When the base station 2 first communicates with a mobile station after deployment of the base station 2, all cyclic shift codes in all resource units have not been used. This is also true when the base station 2 first communicates with a mobile station after reboot of the base station 2. In such a case, the CQI-report-resource allocator 28 (resource unit group designator) selects (i.e., designates), for the CQI report of the SPS mobile station, the resource unit group with the highest favorable ranking that includes sub frames #0, #10, #20, and #30 having the cycle of 10 sub frames at frequency band A.

After designation of the uplink resource unit group having periodicity at a frequency band as the resource unit group for the CQI report of an SPS mobile station, the CQI-report-resource allocator (cyclic-shift-code allocator) 28 allocates a cyclic shift code with regard to the designated resource unit group to the CQI report from the SPS mobile station to the base station 2 in accordance with the above-mentioned predetermined order of precedence. More specifically, the CQI-report-resource allocator 28 refers to the latest-release management table (Fig. 11) and the code-usage management table (Fig. 7), and newly allocates a new cyclic shift code to the CQI report from the SPS mobile station to the base station 2, the new cyclic shift code having a precedence ranking that is lower than the precedence ranking of the latest released cyclic shift code that is common to the mobile station group to which the SPS mobile station to which the new cyclic shift code is to be allocated is to belong, the new cyclic shift code being not used for CQI reports from other mobile stations belonging to the mobile station group, and the new cyclic shift code having the highest precedence ranking in the predetermined order of precedence.

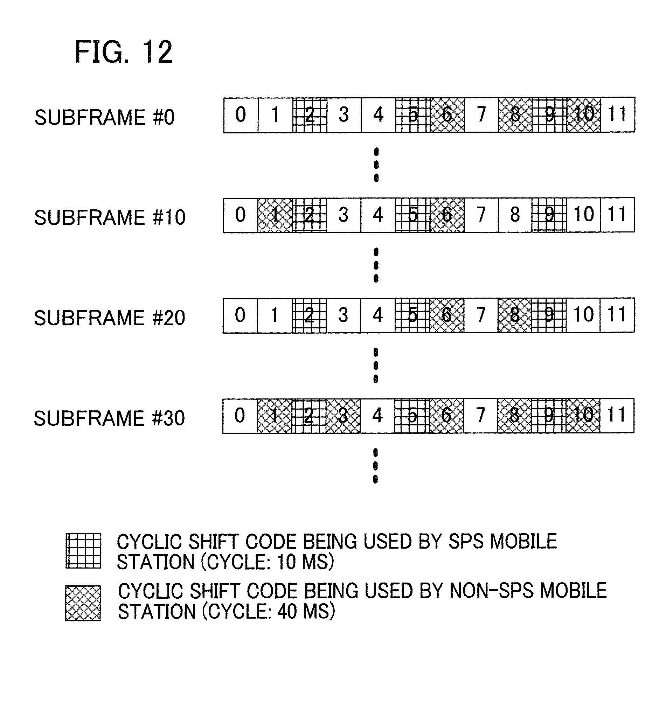

With reference to Fig. 12, the allocation of the cyclic shift code will be described in more detail. Let us assume that the CQI-report-resource allocator 28 has designated the resource unit group that includes subframes #0, #10, #20, and #30 having the cycle of 10 subframes at frequency band A for the CQI report of the SPS mobile station. The mobile station group to which the SPS mobile station will belong is mobile station group #1, and let us assume that the common latest released cyclic shift code that is common to mobile station group #1 for frequency band A has index number 4. In the example of Fig. 12, in a manner similar to the example of Fig. 4A, all of 12 cyclic shift codes are available for CQI reports in each resource unit. However, as shown in Fig. 12, some cyclic shift codes have been used for CQI reports from other mobile stations in each of subframes #0, #10, #20, and #30. In other words, some cyclic shift codes have been used for CQI reports from other mobile stations belonging to mobile station group #1.

As described above with reference to Fig. 4A, in the example in which all 12 cyclic shift codes are available for CQI reports, the order of preference is 0, 4, 8, 2, 6, 10, 1, 5, 9, 3, 7, 11. The index number of the common latest released cyclic shift code that is common to mobile station group #1 is 4, and therefore, let us focus on 8, which is at the next precedence ranking. However, since the cyclic shift code having index number 8 is used by other mobile stations at subframes #0, #20, and #30, let us focus on 2, which is at the next precedence ranking. However, since the cyclic shift code having index number 2 is used by other mobile stations at subframes #0, #10, #20, and #30, let us focus on 6, which is at the next precedence ranking. However, since the cyclic shift code having index number 6 is used by other mobile stations at subframes #0, #10, #20, and #30, let us focus on 10, which is at the next precedence ranking. However, since the cyclic shift code having index number 10 is used by other mobile stations at subframes #0 and #30, let us focus on 1, which is at the next cyclic precedence ranking. Thus, it is determined that the cyclic shift code having a precedence ranking that is lower than the precedence ranking of the latest released cyclic shift code having index number 4, being not used for CQI reports from other mobile stations belonging to mobile station group #1, and having the highest precedence ranking is the cyclic shift code having index number 7. The CQI-report-resource allocator 28 allocates the cyclic shift code having index number 7 to the SPS mobile station that is to newly communicate.

If there is no common latest released cyclic shift code common to the mobile station group to which the SPS mobile station to which the new cyclic shift code is to be allocated is to belong, and if there is no cyclic shift code used for CQI reports from other mobile stations belonging to the mobile station group, the CQI-report-resource allocator 28 allocates the cyclic shift code having the highest precedence ranking, i.e., the cyclic shift code having index number 0 to the SPS mobile station. This may happen, for example, when the base station 2 first communicates with a mobile station after deployment or reboot of the base station 2.

Next, allocation of radio resources to non-SPS mobile stations (second mobile stations) of which the transmission cycle of CQI report is longer will be described. When the new communication detector 26 detects a new communication request with regard to a non-SPS mobile station, in the same manner as in the first embodiment, the CQI-report-resource allocator (resource unit group designator) 28 refers to the code-usage management table (see Fig. 7) of the memory 36, and selects (i.e., designates) a resource unit group having the lowest usage ratio of cyclic shift codes (or having the lowest number of used cyclic shift codes) and the highest favorable ranking for the CQI report of the non-SPS mobile station.

When the base station 2 first communicates with a mobile station after deployment of the base station 2, all cyclic shift codes in all resource units have not been used. This is also true when the base station 2 first communicates with a mobile station after reboot of the base station 2. In such a case, the CQI-report-resource allocator 28 (resource unit group designator) selects (i.e., designates), for the CQI report of the non-SPS mobile station, the resource unit group with the highest favorable ranking that begins with subframe #0 having the cycle of 40 subframes at frequency band A.

After designation of the uplink resource unit group having periodicity at a frequency band as the resource unit group for the CQI report of a non-SPS mobile station, the CQI-report-resource allocator (cyclic-shift-code allocator) 28 allocates a cyclic shift code with regard to the designated resource unit group to the CQI report from the non-SPS mobile station to the base station 2 in accordance with the above-mentioned predetermined order of precedence. More specifically, the CQI-report-resource allocator 28 refers to the latest-release management table (Fig. 8) and the code-usage management table (Fig. 7), and newly allocates a new cyclic shift code to the CQI report from the non-SPS mobile station to the base station 2, the new cyclic shift code having a precedence ranking that is lower than the precedence ranking of the latest released cyclic shift code that is common to the mobile station group to which the non-SPS mobile station to which the new cyclic shift code is to be allocated is to belong, the new cyclic shift code being not used for CQI reports from other mobile stations among cyclic shift codes for the resource unit group selected by the CQI-report-resource allocator 28, and the new cyclic shift code having the highest precedence ranking in the predetermined order of precedence.

With reference to Fig. 12, the allocation of the cyclic shift code will be described in more detail. Let us assume that the CQI-report-resource allocator 28 has designated the resource unit group that begins with subframe #10 having the cycle of 40 subframes at frequency band A for the CQI report of the non-SPS mobile station. The mobile station group to which the non-SPS mobile station will belong is mobile station group #1, and let us assume that the common latest released cyclic shift code that is common to mobile station group #1 for frequency band A has index number 4. In the example of Fig. 12, in a manner similar to the example of Fig. 4A, all of 12 cyclic shift codes are available for CQI reports in each resource unit. However, as shown in Fig. 12, some cyclic shift codes have been used for CQI reports from other mobile stations in subframe #10. In other words, some cyclic shift codes have been used for CQI reports from other mobile stations among cyclic shift codes for the resource unit group selected by the CQI-report-resource allocator 28.

As described above with reference to Fig. 4A, in the example in which all 12 cyclic shift codes are available for CQI reports, the order of preference is 0, 4, 8, 2, 6, 10, 1, 5, 9, 3, 7, 11. The index number of the common latest released cyclic shift code that is common to mobile station group #1 is 4, and therefore, let us focus on 8, which is at the next precedence ranking. The cyclic shift code having index number 8 is not used by other mobile stations at subframe #10. Thus, it is determined that the cyclic shift code having a precedence ranking that is lower than the precedence ranking of the latest released cyclic shift code having index number 4, being not used for CQI reports from other mobile stations among cyclic shift codes for the resource unit group beginning with subframe #10 having the cycle of 40 subframes selected by the CQI-report-resource allocator 28, and having the highest precedence ranking is the cyclic shift code having index number 8. The CQI-report-resource allocator 28 allocates the cyclic shift code having index number 8 to the non-SPS mobile station that is to newly communicate.

If there is no common latest released cyclic shift code common to the mobile station group to which the non-SPS mobile station to which the new cyclic shift code is to be allocated is to belong and if there is no cyclic shift code used for CQI reports from other mobile stations belonging to the mobile station group, the CQI-report-resource allocator 28 allocates the cyclic shift code having the highest precedence ranking, i.e., the cyclic shift code having index number 0 to the non-SPS mobile station. This may happen, for example, when the base station 2 first communicates with a mobile station after deployment or reboot of the base station 2.

In the radio resources management method, when a new communication occurs between the base station and a mobile station, a cyclic code is allocated to the CQI report from the mobile station to the base station, in accordance with a predetermined order of precedence in which multiple cyclic shift codes are arranged differently from the cyclic generation order and the reverse order. The CQI-report-resource allocator 28 allocates a cyclic shift code that is not used for CQI reports from other mobile stations among cyclic shift codes for the designated resource unit group to the CQI from the mobile station to the base station for communication that newly occurs between the base station and the mobile station. Therefore, it is possible to prevent a cyclic shift code currently used for a CQI report from another mobile station from being allocated to the new communication. In addition, the CQI-report-resource allocator 28 allocates a new cyclic shift code to the CQI report from the mobile station to the base station for communication that newly occurs between the base station and the mobile station, the new cyclic shift code having a precedence ranking that is lower than the precedence ranking of the latest released cyclic shift code released latest from a CQI report from another mobile station, the new cyclic shift code being not used for CQI reports from other mobile stations among cyclic shift codes for the designated resource unit group, and the new cyclic shift code having the highest precedence ranking. Thus, a cyclic shift code released latest for the resource unit group can be prevented from being allocated to a newly occurring communication. Therefore, there will be no possibility that a cyclic shift code for reporting the CQI that has been newly released by a base station will be allocated to a mobile station that is to newly communicate with the base station. Furthermore, since multiple cyclic shift codes to be allocated to mobile stations are arranged in the predetermined order of precedence that is different from the cyclic generation order of the cyclic shift codes and that is different from the reverse order of the cyclic generation order, cyclic shift codes having close sequence numbers in the cyclic generation order are less likely to be allocated to two mobile stations. Therefore, there will be a low probability that a delay wave of a CQI report from a mobile station modulated by a cyclic code will interfere with another CQI report from another mobile station modulated by another cyclic code.

The latest-release management table of the memory 36 stores the latest released cyclic shift code that is common to the mobile station group constituted of multiple mobile stations that will share the same resource unit group periodically, and when a cyclic shift code is newly allocated to a mobile station, the CQI-report-resource allocator 28 allocates the cyclic shift code to the mobile station, the cyclic shift code having a precedence ranking that is lower than the precedence ranking of the common latest released cyclic shift code that is common to the mobile station group to which the mobile station is to belong. Thus, by managing the latest released cyclic shift code that is common to a mobile station group constituted of multiple mobile stations that will share the same resource unit group periodically, it is possible for the same cyclic shift code to be prevented from being allocated to multiple mobile stations belonging to each single mobile station group.

When a new communication occurs between the base station and a non-SPS mobile station, the CQI-report-resource allocator 28 selects an uplink resource unit group for which the number of used cyclic shift codes being used for CQI reports from other mobile stations is minimum from among multiple uplink resource unit groups that can be allocated to the CQI report from the non-SPS mobile station. Accordingly, the resource unit group that is less likely to be interfered with CQI reports from other mobile stations can be designated to the non-SPS mobile station of which the transmission cycle of the CQI report is longer. The longer transmission cycle means that once the receiving side fails to receive, a long period is necessary before successful reception. By designating a resource unit group that is less likely to be interfered with CQI reports from other mobile stations to the non-SPS mobile station, it is possible to increase certainty of successful reception, at the base station, of the channel-quality-indicator report from the non-SPS mobile station of which the transmission cycle is longer.

### OTHER VARIATIONS

In the above-described embodiments, the transmission cycle of CQI reports of non-SPS mobile stations is 40 ms, and the transmission cycle of CQI reports of SPS mobile stations is 10 ms, but the transmission cycle are not limited to the embodiments. The transmission cycle of CQI reports of non-SPS mobile stations may be identical with the transmission cycle of CQI reports of SPS mobile stations, and non-SPS mobile stations may "use a resource unit group that is completely the same as the resource unit group" used by SPS mobile stations for sending CQI reports.

The transmission cycle of CQI reports of non-SPS mobile stations may be shorter than the transmission cycle of CQI reports of SPS mobile stations. In this case, in the first embodiment and the second embodiment, when a new communication occurs between the base station and an SPS mobile station, it is preferable that the CQI-report-resource allocator 28 select, from among multiple uplink resource unit groups that are allocatable to CQI reports of SPS mobile stations, a resource unit group for which the number of cyclic shift codes being used for CQI reports from other mobile stations is minimum. By this means, resource units that are less likely to be interfered with CQI reports from other mobile stations can be designated to SPS mobile stations of which the transmission cycle of CQI reports is longer.

The transmission cycle of CQI reports of mobile stations may be identical with or different from the cycle of scheduling at the base station.

In the base station 2, functions executed by the CPU may be executed by hardware or a programmable logic device, such as an FPGA (Field Programmable Gate Array) or a DSP (Digital Signal Processor), instead of the CPU.

**REFERENCE SYMBOLS**

| | |
|---|---|
| 2: Base station | 2a: Cell |
| 4: Mobile station | 10: Reception antennas |
| 12: Radio receiver | 14: Reception signal processor |
| 16: CQI report analyzer | 18: Resource allocator |
| 20: Transmission signal processor | 22: Radio transmitter |
| 24: Transmission antennas | 26: New communication detector |
| 28: CQI-report-resource allocator (resource unit group designator, cyclic-shift-code allocator) | |
| 30: Communication-end-and-disconnection detector | |
| 32 CQI-report-resource releaser (cyclic-shift-code releaser) | |
| 34: Mobile station classifier | |
| 35: Latest-allocated-cyclic-shift-code manager | |
| 36: Memory (used cyclic-shift-code storage unit, latest-allocated cyclic-shift-code storage unit, latest-released cyclic-shift-code storage unit) | |
| 135 Latest-released cyclic-shift-code manager | |

## Claims

1. A radio resource management apparatus used in a system in which a base station communicates with multiple mobile stations in accordance with orthogonal frequency division multiple access, multiple mobile stations modulate channel-quality-indicator reports by different cyclic shift codes for reporting channel quality indicators corresponding to reception qualities at the mobile base stations to the base station, respectively, and uplink the modulated channel-quality-indicator reports by using resource units specified by frequency and time, the radio resource management apparatus managing radio resources used for the channel-quality-indicator reports, the radio resource management apparatus comprising:
a resource unit group designator adapted for newly designating, when a communication newly occurs between the base station and a mobile station, an uplink resource unit group in a frequency band having periodicity, so that the mobile station uses the uplink resource unit group for sending a channel-quality-indicator report periodically;
a cyclic-shift-code allocator adapted for newly allocating a cyclic shift code to the channel-quality-indicator report from the mobile station to the base station with respect to the designated resource unit group, in accordance with a predetermined order of precedence, multiple cyclic shift codes being arranged in the predetermined order of precedence that is different from a cyclic generation order of the cyclic shift codes and that is different from a reverse order of the cyclic generation order;
a cyclic-shift-code releaser adapted for releasing the cyclic shift code allocated to the channel-quality-indicator report from the mobile station to the base station when the communication between the base station and the mobile station has ended or been disconnected;
a used cyclic-shift-code storage unit for storing multiple used cyclic shift codes allocated by the cyclic-shift-code allocator with respect to the designated resource unit group in such a manner that the used cyclic shift codes are associated with mobile stations to which the used cyclic shift codes are allocated; and
a latest-allocated cyclic-shift-code storage unit for storing a latest allocated cyclic shift code allocated latest by the cyclic-shift-code allocator,
wherein the cyclic-shift-code allocator is adapted for newly allocating a new cyclic shift code to a channel-quality-indicator report from a mobile station to the base station for a communication that newly occurs between the base station and the mobile station, the new cyclic shift code having a precedence ranking that is lower than a precedence ranking of the latest allocated cyclic shift code allocated latest by the cyclic-shift-code allocator for a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence.

2. The radio resource management apparatus according to claim 1,
wherein the multiple mobile stations include multiple first mobile stations that transmit the channel-quality-indicator reports to the base station at a first regular cycle and multiple second mobile stations that transmit the channel-quality-indicator reports to the base station at a second regular cycle,
the radio resource management apparatus further comprising:
a mobile station classifier adapted for classifying the multiple first mobile stations and the multiple second mobile stations into multiple mobile station groups in such a manner that multiple first mobile stations that use the same resource unit group for sending the channel-quality-indicator reports to the base station periodically and multiple second mobile stations that use a resource unit group that is at least partially the same as the resource unit group used by the first mobile stations for sending the channel-quality-indicator reports to the base station periodically belong to a mobile station group,
wherein the latest-allocated cyclic-shift-code storage unit stores the latest allocated cyclic shift code allocated latest by the cyclic-shift-code allocator, as a common latest allocated cyclic shift code that is common to the first mobile stations and the second mobile stations belonging to a mobile station group including a mobile station to which the latest allocated cyclic shift code is allocated latest by the cyclic-shift-code allocator, and
wherein the cyclic-shift-code allocator is adapted for newly allocating a new cyclic shift code to a channel-quality-indicator report from a first mobile station to the base station for a communication that newly occurs between the base station and the first mobile station, the new cyclic shift code having a precedence ranking that is lower than a precedence ranking of the latest allocated cyclic shift code that is common to the mobile station group to which the first mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence.

3. The radio resource management apparatus according to claim 2, wherein the cyclic-shift-code allocator is adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest allocated cyclic shift code that is common to the mobile station group to which the second mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence.

4. The radio resource management apparatus according to claim 2, wherein the first regular cycle at which multiple first mobile stations send the channel-quality-indicator reports to the base station is shorter than the second regular cycle at which multiple second mobile stations send the channel-quality-indicator reports to the base station,
wherein the resource unit group designator is adapted for selecting, when a communication that newly occurs between the base station and a second mobile station, an uplink resource unit group for which the number of used cyclic shift codes used for channel-quality-indicator reports from other mobile stations is minimum from among multiple uplink resource unit groups that can be allocated to the channel-quality-indicator report from the second mobile station, and
wherein the cyclic-shift-code allocator is adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest allocated cyclic shift code that is common to the mobile station group to which the second mobile station to which the new cyclic shift code is to be allocated is to belong, the new cyclic shift code being not used for channel-quality-indicator reports from other mobile stations among cyclic shift codes for the resource unit group selected by the resource unit group designator, and the new cyclic shift code having a highest precedence ranking in the predetermined order of precedence.

5. A radio resource management apparatus used in a system in which a base station communicates with multiple mobile stations in accordance with orthogonal frequency division multiple access, multiple mobile stations modulate channel-quality-indicator reports by different cyclic shift codes for reporting channel quality indicators corresponding to reception qualities at the mobile base stations to the base station, respectively, and uplink the modulated channel-quality-indicator reports by using resource units specified by frequency and time, the radio resource management apparatus managing radio resources used for the channel-quality-indicator reports, the radio resource management apparatus comprising:
a resource unit group designator adapted for newly designating, when a communication newly occurs between the base station and a mobile station, an uplink resource unit group in a frequency band having periodicity, so that the mobile station uses the uplink resource unit group for sending a channel-quality-indicator report periodically;
a cyclic-shift-code allocator adapted for newly allocating a cyclic shift code to the channel-quality-indicator report from the mobile station to the base station with respect to the designated resource unit group, in accordance with a predetermined order of precedence, multiple cyclic shift codes being arranged in the predetermined order of precedence that is different from a cyclic generation order of the cyclic shift codes and that is different from a reverse order of the cyclic generation order;
a cyclic-shift-code releaser adapted for releasing the cyclic shift code allocated to the channel-quality-indicator report from the mobile station to the base station when the communication between the base station and the mobile station has ended or been disconnected;
a used cyclic-shift-code storage unit for storing multiple used cyclic shift codes allocated by the cyclic-shift-code allocator with respect to the designated resource unit group in such a manner that the used cyclic shift codes are associated with mobile stations to which the used cyclic shift codes are allocated; and
a latest-released cyclic-shift-code storage unit for storing a latest released cyclic shift code released latest by the cyclic-shift-code releaser,
wherein the cyclic-shift-code allocator is adapted for newly allocating a new cyclic shift code to a channel-quality-indicator report from a mobile station to the base station for a communication that newly occurs between the base station and the mobile station, the new cyclic shift code having a precedence ranking that is lower than a precedence ranking of the latest released cyclic shift code released latest by the cyclic-shift-code releaser for a channel-quality-indicator report from another mobile station, the new cyclic shift code being not used for channel-quality-indicator reports from other mobile stations among cyclic shift codes for the resource unit group, and the new cyclic shift code having a highest precedence ranking in the predetermined order of precedence.

6. The radio resource management apparatus according to claim 5,
wherein the multiple mobile stations include multiple first mobile stations that transmit the channel-quality-indicator reports to the base station at a first regular cycle and multiple second mobile stations that transmit the channel-quality-indicator reports to the base station at a second regular cycle,
the radio resource management apparatus further comprising
a mobile station classifier adapted for classifying the multiple first mobile stations and the multiple second mobile stations into multiple mobile station groups in such a manner that multiple first mobile stations that use the same resource unit group for sending the channel-quality-indicator reports to the base station periodically and multiple second mobile stations that use a resource unit group that is at least partially the same as the resource unit group used by the first mobile stations for sending the channel-quality-indicator reports to the base station periodically belong to a mobile station group,
wherein the latest-released cyclic-shift-code storage unit stores the latest released cyclic shift code released latest by the cyclic-shift-code releaser, as a common latest released cyclic shift code that is common to the first mobile stations and the second mobile stations belonging to a mobile station group including a mobile station for which the latest released cyclic shift code is released latest by the cyclic-shift-code releaser, and
wherein the cyclic-shift-code allocator is adapted for newly allocating a new cyclic shift code to a channel-quality-indicator report from a first mobile station to the base station for a communication that newly occurs between the base station and the first mobile station, the new cyclic shift code having a precedence ranking that is lower than a precedence ranking of the latest released cyclic shift code that is common to the mobile station group to which the first mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence.

7. The radio resource management apparatus according to claim 6, wherein the cyclic-shift-code allocator is adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest released cyclic shift code that is common to the mobile station group to which the second mobile station to which the new cyclic shift code is to be allocated is to belong, the new cyclic shift code being not used for channel-quality-indicator reports from other mobile stations belonging to the mobile station group, and the new cyclic shift code having a highest precedence ranking in the predetermined order of precedence.

8. The radio resource management apparatus according to claim 6, wherein the first regular cycle at which multiple first mobile stations send the channel-quality-indicator reports to the base station is shorter than the second regular cycle at which multiple second mobile stations send the channel-quality-indicator reports to the base station,
wherein the resource unit group designator is adapted for selecting, when a communication newly occurs between the base station and a second mobile station, an uplink resource unit group for which the number of used cyclic shift codes used for channel-quality-indicator reports from other mobile stations is minimum from among multiple uplink resource unit groups that can be allocated to the channel-quality-indicator report from the second mobile station, and
wherein the cyclic-shift-code allocator is adapted for newly allocating a new cyclic shift code to a channel-quality-indicator report from a second mobile station to the base station for a communication that newly occurs between the base station and the second mobile station, the new cyclic shift code having a precedence ranking that is lower than a precedence ranking of the latest released cyclic shift code that is common to the mobile station group to which the second mobile station to which the new cyclic shift code is to be allocated is to belong, the new cyclic shift code being not used for channel-quality-indicator reports from other mobile stations among cyclic shift codes for the resource unit group selected by the resource unit group designator, and the new cyclic shift code having a highest precedence ranking in the predetermined order of precedence.
